(19) Europäisches Patentamt
European Patent Office
Office européen des brevets

(11) **EP 2 310 309 B1**

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(21) Anmeldenummer: **09775718.1**

(22) Anmeldetag: **22.04.2009**

(51) Int Cl.:
*B65H 43/08* (2006.01)   *G06T 5/00* (2006.01)
*G06T 7/00* (2006.01)   *B65H 29/66* (2006.01)
*B65H 7/14* (2006.01)   *B41F 33/00* (2006.01)
*G06T 3/00* (2006.01)

(86) Internationale Anmeldenummer:
**PCT/CH2009/000127**

(87) Internationale Veröffentlichungsnummer:
**WO 2010/009561 (28.01.2010 Gazette 2010/04)**

(54) **OPTISCHES KONTROLLVERFAHREN ZUR ERKENNUNG VON DRUCKEREIERZEUGNISSEN BEI DER DRUCKWEITERVERARBEITUNG**

OPTICAL CONTROL METHOD FOR DETECTING PRINTED PRODUCTS DURING PRINT FINISHING

PROCÉDÉ DE CONTRÔLE OPTIQUE DESTINÉ À LA DÉTECTION DE PRODUITS IMPRIMÉS LORS DU TRAITEMENT ULTÉRIEUR D'IMPRESSION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **25.07.2008 CH 11762008**

(43) Veröffentlichungstag der Anmeldung:
**20.04.2011 Patentblatt 2011/16**

(73) Patentinhaber: **Ferag AG**
**8340 Hinwil (CH)**

(72) Erfinder: **MÄDER, Carl, Conrad**
**CH-8335 Hittnau (CH)**

(74) Vertreter: **Rentsch Partner AG**
**Rechtsanwälte und Patentanwälte**
**Fraumünsterstrasse 9**
**Postfach 2441**
**8022 Zürich (CH)**

(56) Entgegenhaltungen:
**JP-A- 2004 098 489**

**Beschreibung**

Die vorliegende Erfindung fällt in das Gebiet der Druckweiterverarbeitung und betrifft ein optisches Kontrollverfahren sowie eine Vorrichtung zur Durchführung eines derartigen Kontrollverfahrens.

Derzeit sind mehrere Kontrollverfahren zur Erkennung von fehlerhaften oder falschen flächigen, flexiblen Druk-kereierzeugnissen bei der Druckweiterverarbeitung bekannt. Dabei erzeugt jeweils mindestens ein optischer Sensor jeweils mindestens ein elektronisches Bild eines Druckereierzeugnisses. Anschliessend wird das elektronische Bild in einer Bildverarbeitungseinheit mit einem Referenzbild verglichen. An dieser Stelle sei die EP-A-0685420 stellvertretend für weitere Publikationen genannt.

Aus dem Stand der Technik sind ebenfalls diverse Bildinhaltserkennungsverfahren bekannt, mit welchen Muster und/oder Texte auf flächigen, flexiblen Druckereierzeugnissen erkannt werden können. Die US 2006/0147092 A1 und die EP 534115 A1 stehen stellvertretend für derartigen Stand der Technik.

Allen darin offenbarten Lehren ist gemeinsam, dass eine Aufnahmerichtung des mindestens einen optischen Sensors im Wesentlichen senkrecht zu einer vom flächigen Druckereierzeugnis definierten Ebene angeordnet ist.

Ist die Aufnahmerichtung nicht jedoch einigermassen senkrecht zur Ebene angeordnet, kann eine Bildverarbeitungseinheit inhaltlich korrekte Bildinhalte, welche gegenüber dem Referenzbild verschoben und/oder verdreht sind, nicht mehr als solche erkennen und interpretiert das kontrollierte Druckereierzeugnis in der Folge als falsch oder fehlerhaft. Fehlerhafte Druckereierzeugnisse können beispielsweise durch an sich korrekte aufgrund von Produktionsfehlern jedoch Schmierspuren, Abrieb, Risse, zerknitterte Bereichen und ähnliche Defekten aufweisen. Daher wird in der vorliegenden Beschreibung alternativ zur Bezeichnung falsches Druckereierzeugnis auch der Begriff fehlerhaftes Druckereierzeugnis verwendet.

Im weiteren Verlauf werden die als falsch oder fehlerhaft identifizierten Druckereierzeugnisse entsprechend behandelt, beispielsweise in dem sie von einer Weiterverarbeitung ausgeschlossen oder nachbearbeitet werden. Bei näherer Betrachtung erweisen sich die vom Bildinhaltserkennungsverfahren als fehlerhaft erachteten Druckereierzeugnisse jedoch oft als fehlerfrei oder zumindest als tolerierbar, weshalb sie nach Möglichkeit in den Weiterverarbeitungszyklus zurückgeführt werden. Die Rückführung beinhaltet oft manuelle Operationen. In jedem Fall ist die Wirtschaftlichkeit der Druckweiterverarbeitung in unerwünschter Weise vermindert.

Es ist deshalb eine Aufgabe der vorliegenden Erfindung, die Zuverlässigkeit der Erkennung von falschen oder tatsächlich fehlerhaften Druckereierzeugnissen zu erhöhen, da falsche und fehlerhafte Druckereierzeugnisse zu Störungen und Schäden bei der weiteren Druckweiterverarbeitung führen.

Die der durch die Ansprüche 1-8 definierte Erfindung für das Verfahren zugrunde liegende Aufgabe wird mit den Merkmalen des Patentanspruchs 1 gelöst. Weitere Ausführungsformen sind Gegenstand der abhängigen Patentansprüche 2 bis 8.

Beim Kontrollverfahren zur Verwendung in der Druckweiterverarbeitung werden typischerweise eine Vielzahl von flächigen, flexiblen Druckereierzeugnissen entlang einer Förderstrecke an mindestens einem optischen Sensor vorbei geführt. Der mindestens eine optische Sensor erfasst mindestens ein elektronisches Bild jedes Druckereierzeugnisses, welches mindestens einen Ausschnitt beziehungsweise Bereich der Druckereierzeugnisse beinhaltet. Versuche haben gezeigt, dass je nach Anforderungen ein einziger optischer Sensor zur Erreichung einer zuverlässigen Erzeugniserkennung bei einer hohen Erkennungsrate ausreichend ist, um das erfindungsgemässe Kontrollverfahren durchzuführen. Anschliessend wird das elektronische Bild auf Basis von Korrekturangaben in ein korrigiertes Bild überführt. Die Korrekturangaben bewirken eine Umwandlung einer Aufnahmeperspektive des mindestens einen optischen Sensors in eine Sollperspektive. Da der Einfluss der durch die Aufnahmeperspektive verursachten perspektivischen Ansicht des erfassten Druckereierzeugnisses durch die Korrektur eliminiert oder zumindest stark gedämpft wird, wird die Korrektur auch Entzerrung genannt. Ist die Aufnahmerichtung beispielsweise gegenüber einer durch ein Druckereierzeugnis definierten Ebene schräg angeordnet (d.h. ein Neigungswinkel ist kleiner oder grösser als 90°), so weist ein rechteckförmiges Druckereierzeugnis aufgrund der perspektivischen Ansicht auf dem elektronischen Bild eine trapezartige Kontur auf, siehe z.B. JP 2004 098 489. Auf dem korrigierten Bild ist die Kontur des Druckereierzeugnisses wie beim Referenzbild wiederum rechteckförmig und weist weitestgehend dieselben Proportionen wie das im Referenzbild enthaltene Referenzdruckereierzeugnis auf.

Unter Sollperspektive wird nachfolgend eine Perspektive verstanden, welche einen behinderungsfreien oder zumindest behinderungsarmen Vergleich zwischen dem korrigierten Bild mit dem erfassten Druckereierzeugnis und dem Referenzbild erlaubt. Idealerweise entspricht das korrigierte Bild einem Bild, welches von einem optischen Sensor erfasst ist, dessen Aufnahmerichtung im Wesentlichen rechtwinklig zu einer vom Druckereierzeugnis definierten Ebene angeordnet ist. Im Idealfall entspricht das Sollbild einem Flachbett-Scan des zu kontrollierenden Druckereierzeugnisses. In der Praxis stammt das Sollbild beispielsweise von einer in Flussrichtung gesehen vorgelagerten Einheit, wie etwa einer Rotationsdruckmaschine oder deren Druckvorstufe.

Die Korrekturangaben basieren je nach Anforderung an das Kontrollverfahren auf Geometriedaten oder mindestens eines Bildinhalts der Druckereierzeugnisse. Geometriedaten können dabei beispielsweise durch das Format oder die Form der Druckereierzeugnisse gebildet sein, während der Bildinhalt typischerweise durch gedruckten Text, Textspalten, Linien, Muster und Ähnlichem gebildet sind.

Die Korrekturangaben sind beispielsweise dadurch generierbar, dass ein elektronisches Bild mit einem Referenzdruckereierzeugnis und einem ebenfalls in elektronischer Form vorliegenden Referenzbild einer Bildverarbeitungseinheit zugeführt werden, welche daraus die für diese Sensor Korrekturangaben errechnet. In weiterer Ausführungsformen kann anstelle des Referenzbildes ein Vergleich auf Basis eines Referenzwertes erfolgen.

Die Korrekturangaben liegen in Form von befehlsartigen Informationen oder Instruktionen sowie Befehlen vor, anhand welcher Bildpunkte des elektronischen Bildes in entsprechende Bildpunkte des korrigierten Bildes überführt werden. Je nach Ausführungsform liegen die Korrekturangaben in Form einer Vektormatrix vor, welche die Entzerrung für entsprechende Bildpunkte (Pixel) des elektronischen Bildes bewirken. Je nach Ausführungsform des Kontrollverfahrens sind die Korrekturangaben beispielsweise in Form einer Referenztabelle oder Referenzwerten vorhanden. Die Korrekturangaben werden typischerweise vorgängig zu einem Produktionsprozess generiert und basieren auf den oben genannten Geometrieangaben oder dem Bildinhalt des erfassten Druckereierzeugnisses.

Abschnitte des elektronischen Bildes, welche keinen Bereich des zu kontrollierenden Druckereignisses bildlich wiedergeben, werden je nach Ausführungsform des Kontrollverfahrens bei der Überführung zwar ebenfalls korrigiert, anschliessend jedoch von einer nachfolgenden Bildweiterverarbeitung ausgeschlossen. Zur Veranschaulichung dieses Vorgangs sei hier ein Beispiel eines rechteckförmigen elektronischen Bildes mit einem Abbild eines Druckereierzeugnisses genannt, welches im Referenzbild eine rechteckförmige Kontur aufweist. Im elektronischen Bild weist das Druckereierzeugnis aus perspektivischen Gründen jedoch eine trapezförmige Kontur auf. Beim Korrigieren wird das rechteckförmige Format des elektronischen Bildes so verändert, so dass es unter Umständen keine einfach definierbaren Formatgrenzen mehr aufweist. Dafür entspricht das im korrigierten Bild gezeigte Format des Druckereierzeugnisses im Wesentlichen wieder dem Format des Referenzdruckereierzeugnisses auf dem Referenzbild. Für die nachgeschaltete Bildweiterverarbeitung wird lediglich ein bestimmter Bildausschnitt des korrigierten Bildes, beispielsweise ein quadratischer Bereich weiterverwendet, während der Rest gelöscht wird.

Die Korrekturangaben sind je nach Ausführungsform des erfindungsgemässen Kontrollverfahrens auf der Bildverarbeitungseinheit gespeichert oder werden der Bildverarbeitungseinheit zum Durchführen der Perspektivenkorrektur zugeführt. Für die vorliegende Erfindung ist es nicht relevant, ob die Korrekturangaben für die aktuelle Sensorposition relativ zu den erfassten Druckeierzeugnissen vollautomatisch oder manuell, beispielsweise über ein Abtasten oder ein optisches Erfassens eines Referenzdruckereierzeugnisses oder mehrerer Referenzdruckereierzeugnisse ermittelt oder anhand einer Eingabe über das Display einer Maschine, oder einer Kombination davon erzeugt worden sind. Entscheidend ist einzig, dass die Funktion gewährleistet ist.

Das korrigierte Bild wird anschliessend mit einem Referenzwert oder einem Referenzbild verglichen. Aufgrund des Ergebnisses dieses Vergleichs wird mindestens ein Signal erzeugt. Der Referenzwert oder das Referenzbild sind je nach Anforderung vorgängig zum eigentlichen Produktionsprozess erfasst, erlernt oder eingegeben worden.

Eine zuverlässige Erkennung von Bildinhalten von Druckereierzeugnissen, welche zum Zeitpunkt von deren Erfassung durch den Sensor nicht oder nur teilweise in einer Ebene angeordnet sind, beispielsweise weil sie eine oder mehrere Freiformflächen aufwiesen und sich die für eine Erkennung potentiell geeigneten Bildinhalte oder sonstigen Eigenschaften just im Bereich der Freiformflächen befinden, ist mit bekannten Verfahren bislang nicht möglich. Im Unterschied dazu eignet sich das erfindungsgemässe Kontrollverfahren auch für die Erkennung von Eigenschaften von freiformflächig gebogenen Druckereierzeugnissen.

Mögliche Beispiele weiterer Freiformflächen sind etwa gebogene Eckbereiche oder gefaltete Druckereierzeugnisse und/oder gefaltete Druckbogen, welche im Falzbereich aufbauchen und so eine Wölbung eines Umschlags oder einer flächigen Seite des Druckereierzeugnisses verursachen. Mit dem erfindungsgemässen Verfahren können selbst dann Eigenschaften und/oder Merkmale zuverlässig erkannt werden, wenn eine Kombination der oben genannten Freiformflächen auftritt, beispielsweise, wenn vom Fahrtwind gebogene Druckbogen an einer Umlenkung des Förderpfades an einer freien Ecke entlang einem Leitblech streifen und die Aufnahmerichtung des optischen Sensors zum Druckereierzeugnis in einem freien Winkel angeordnet ist. Unter freiem Winkel wird beispielsweise eine Neigung der Aufnahmerichtung zu einer vom Druckereierzeugnis definierten Ebene sowohl in Förderrichtung, wie auch quer zur Förderrichtung verstanden. Eine entsprechende Anordnung ist erfindungsgemäss selbst beim Fehlen einer definierten Ebene der Druckereierzeugnisse infolge von Freiformflächen möglich. Bei Aufnahmerichtungen mit grösserem oder kleinerem freien Winkel beeinträchtigt die Reflektion der dem optischen Sensor zugewandten Seiten der Druckereierzeugnisse die Qualität der elektronischen Bilder erfahrungsgemäss stark. Typische Werte für Neigungswinkel, welche zu guten Kontrollresultaten führen, liegen zwischen etwa 30 Grad und etwa 150 Grad. Der Neigungswinkel kann je nach Bedarf auch an die Förderrichtung des Fördermittels angepasst werden.

Unter Druckereierzeugnissen werden dabei sowohl einzelne Druckereierzeugnisse, als auch Gruppen von mehreren Druckereierzeugnissen verstanden. Dabei umfassen die Druckereierzeugnisse mindestens je ein flächiges, flexibles Druckprodukt beziehungsweise Druckereiprodukt, welches wiederum ein Hauptprodukt und/oder mindestens ein Teilprodukt umfassen kann. Ebenso kann ein Druckereierzeugnis, oder können mehrere Druckereierzeugnisse, und/oder ein Druckprodukt oder mehrere Druckprodukte oder eine Kombination daraus, in einen Umschlag oder einen weiteren Gegenstand eingesteckt, gesammelt oder zusammengetragen sein. Weiter kann es sich beim Hauptprodukt und/oder beim Teilprodukt um Beilagenaller Art handeln, beispielsweise um ein Warenmuster.

Das korrigierte Bild bietet eine ideale Basis für eine Bildinhalts- und/oder Produkterkennung. Für die Qualität und die Zuverlässigkeit der Erkennung ist die Entzerrung der Perspektive wesentlich, da sonst von einer optimalen (Soll-)Position und (Soll-) Orientierung versetzte Bildinhalte beziehungsweise Sujets nicht oder kaum wirtschaftlich wieder erkennbar sind. Selbst verhältnismässig einfache Bildinhalte wie Zeichen, geometrische Elemente (Linien, Kreise), Bilder oder Muster sind unter perspektivischen Bedingungen von einem menschlichen Betrachter bei einem Vergleich mit dem Referenzbild sofort wieder erkennbar, konnten mit Vorrichtungen des Standes der Technik bislang jedoch nicht zuverlässig automatisiert und als solche wieder erkannt werden. Eine automatisierte, maschinelle Suche von gleichen Bildinhalten innerhalb eines vorgegeben Suchbereichs auf Druckereierzeugnissen ist mit typischen Vorrichtungen des Standes der Technik nur dann befriedigend durchführbar, wenn die Aufnahmerichtung des optische Sensors bei der Erfassung des zu untersuchenden Druckereierzeugnisses rechtwinklig zu einer Ebene angeordnet ist, in welcher sich das zu kontrollierende Druckereierzeugnis befindet. Diese Bedingung ist jedoch aufgrund der oft beengten, räumlichen Verhältnisse für die betreffenden Vorrichtungen kaum in die Praxis umsetzbar.

Überdies ermöglicht das korrigierte Bild eine im Vergleich zu bekannten Kontrollverfahren der Druckweiterverarbeitung zuverlässigere Unterscheidung von fehlerhaften und korrekten Druckereierzeugnissen und trägt somit wesentlich zur Wirtschaftlichkeit bei.

Um im Zusammenhang einer Erkennung von Bildinhalten des Druckereierzeugnisses die Zuverlässigkeit der Erkennung weiter zu erhöhen, ist es je nach Ausführungsform von Vorteil, wenn auf dem elektronischen Bild keine Kontur-/Randbereiche des Druckereierzeugnisses und dadurch kein störender Hintergrund abgebildet sind.

Ein Vorteil des erfindungsgemässen Kontrollverfahrens liegt darin, dass sowohl die in einem einzigen elektronischen Bild enthaltenen geometrischen Eigenschaften der erfassten Druckereierzeugnisse als auch die Bildinhalte der elektronisch erfassten Druckereierzeugnisse bedarfsweise auswertbar sind. Unter bedarfsweiser Auswertung wird beispielsweise eine parallele oder sequentielle Auswertung verstanden, bei welcher in einem ersten Teilschritt das elektronische Bild auf ein Sollklebefeld hin untersucht wird, etwa für ein Aufbringen eines Memosticks® untersucht wird, während dasselbe elektronische Bild in einem zweiten Teilschritt ebenfalls genutzt wird, etwa um eine Kantenposition des Druckereierzeugnisses für eine nachgeschaltete Foliereinheit zu ermitteln.

Ein weiterer Vorteil des erfindungsgemässen Kontrollverfahrens liegt darin, dass die optische Kontrolle unabhängig von der Förderrichtung eines die Druckereierzeugnisse transportierenden Fördermittels bezüglich des optischen Sensors ist. Je nach Anforderungen ist dasselbe Verfahren sogar für ein vor- und zurücklaufendes Fördermittel einsetzbar, ohne dass an der dazu dienenden Vorrichtung eine Änderung erforderlich ist.

Ein Fachmann erkennt, dass die vorliegende Erfindung den Einsatzbereich für optische Kontrollen gegenüber bekannten Verfahren beträchtlich erweitert. Mit dem erfindungsgemässen Kontrollverfahren können im Vergleich zu herkömmlichen Kontrollverfahren auch bislang nicht nutzbare Orte wie etwa Umlenkstellen von Fördermitteln, Übergabestellen, Schuppenströme, vom Fahrtwind verformte, hängend transportierte Druckereierzeugnisse und ähnliche Förderabschnitte entlang von Förderstrecken zur Erkennung von Druckereierzeugnissen aktiv genutzt werden. Je nach Ausführungsform der Vorrichtung kann eine dazu geeignete Vorrichtung zur Durchführung des erfindungsgemässen Verfahrens auch modular aufgebaut sein und bedarfsweise an die Förderstrecke geschoben werden, falls eine zusätzliche Kontrolle der Druckereierzeugnisse dies erfordert. Entscheidend ist, dass sich die Korrekturangaben stets auf eine bestimmte Sensorposition bezüglich den sich im Wesentlichen gleich verformten und/oder geförderten Druckereierzeugnissen beziehen. Wird die Sensorposition verändert, erfordert dies neue Korrekturangaben.

Ein weiterer Vorteil des erfindungsgemässen Kontrollverfahrens besteht darin, dass die Druckereierzeugnisse während der optischen Kontrolle nicht vereinzelt werden müssen, sondern in deren Produktestrom, so etwa einem Schuppenstrom, verbleiben können.

Je nach Einsatz des erfindungsgemässen Kontrollverfahrens sind aus den elektronischen Bildern gewonnene Informationen über die betreffenden Druckereierzeugnisse als Entscheidungsgrundlage über die weitere Behandlung von gewissen vorbestimmten Kriterien entsprechender Druckereierzeugnissen nutzbar. Je nach Bedarf kann die Behandlung ein Ausschleusen falscher oder fehlerhafter Druckereierzeugnisse oder eine Sonderbehandlung oder Nachbehandlung, etwa in Form eines Nachrichtens von korrekten, jedoch bezüglich einer Solllage oder Sollorientierung übermässig verschobenen Druckereierzeugnissen sein.

Je nach Bedarf kann ein von einer Bildverarbeitungseinheit veranlasstes Signal als Ergebnis eines Bildvergleiches als Fehlermeldung genutzt werden, welche einem Bediener beispielsweise einen Hinweis auf einen nicht oder fehlerhaft arbeitenden Zuförderer- oder eine defekte Bearbeitungsstation gibt. Falls das oben genannte Signal zusätzlich Werte enthält, können diese Werte beispielsweise von einer Maschinenregelung zur selbsttätigen Nachregelung von vor- oder nachgeschalteten Anlagen oder Anlageteilen genutzt werden. Wird beispielsweise eine Region im Falzbereich der Druckereierzeugnisse von einem in Förderrichtung gesehen seitlich auf die im Schuppenstrom geförderten Druckereierzeugnisse gerichteten, optischen Sensor erfasst, so ist auf den elektronischen Bildern jeweils eine von Seitenkanten umschlossene, schlüssellochförmige Öffnung (engl. "key hole") enthalten. Dieses "key hole" ist beispielsweise bei einem runden Bund oder einem nicht gepressten Bund von Interesse. Die Form und Ausdehnung der schlüssellochförmigen Öffnung ist von Verarbeitungsfaktoren wie Fördergeschwindigkeit und Anzahl von Druckereierzeugnissen pro Streckenabschnitt sowie von allfälligen Schuppenstromfaktoren abhängig. In weiteren Anwendungsfällen dient das erfindungsgemässe Kontrollverfahren zur Ermittlung von Verarbeitungsfaktoren, welche von einer lokalen oder übergeordneten Steuerung oder Regelung nutzbar sind.

Dank des erfindungsgemässen Kontrollverfahrens ist der Aufwand zum präzisen Einrichten und Justieren des optischen Sensors bezüglich des Fördermittels und/oder der damit transportierten Druckereierzeugnisse im Vergleich zu Vorrichtungen des Standes der Technik erheblich verringerbar, da eine präzise Positionierung des optischen Sensors für die Bildkorrektur und den anschliessenden Vergleich allenfalls noch eine untergeordnete Rolle spielt und eine Sensorpositionierung in einem nahezu beliebigen, freien Winkel zu den Druckereierzeugnisses möglich ist. Das erfindungsgemässe Kontrollverfahren ermöglicht daher eine raschere und dadurch wirtschaftlichere Installation oder Umrüstung mit geringerem Aufwand als bei den bekannten Kontrollvorrichtungen beziehungsweise Kontrollverfahren.

In weiteren Ausführungsformen des Bildaufbereitungsverfahrens erfolgen die Erstellung der korrigierten Bilder und/oder deren Bildverarbeitung in Echtzeit oder quasi in Echtzeit. Dies ermöglicht einen Einsatz in automatisierten Hochleistungssystemen der Druckweiterverarbeitung, welche derzeit Verarbeitungskapazitäten im Hochleistungsbereich in einer Verarbeitungslinie von derzeit zirka 40'000 bis etwa 80'000 Druckereierzeugnisse pro Stunde aufweisen. Entsprechend werden unter dem Begriff Echtzeit Verarbeitungszeiten der Bildverarbeitungseinheit verstanden, die kleiner oder gleich einer daraus resultierenden Arbeitstaktzeit beziehungsweise Produktionstaktzeit von etwa 0.09 Sekunden bei 40'000 Druckereierzeugnisse pro Stunde und ungefähr 0.045 Sekunden bei 80'000 Druckereierzeugnisse pro Stunde betragen. Falls die Bildverarbeitung nicht innerhalb der Arbeitstaktzeit durchführbar ist, erfasst ein erster Sensor in einer weiteren Ausführungsform beispielsweise nur jedes zweite Druckereierzeugnisse, während ein zweiter Sensor die jeweils dazwischen liegenden Druckereierzeugnisse erfasst. Je nach Rechnerkapazität ist die Bildbearbeitung von beiden optischen Sensoren auf der selben Bildverarbeitungseinheit gemeinsam durchführbar.

Falls für die nachgeschaltete Bildverarbeitung Konturen von Bildinhalten und/oder Kanten verdeutlicht und/oder hervorgehoben sein sollen, werden die elektronischen Bilder bei weiteren Ausführungsformen des Kontrollverfahrens mit einem geeigneten elektronischen Filter vorgängig weiter aufbereitet, beispielsweise indem sie mit einem Sobel-Filter gefiltert werden.

Das erfindungsgemässe Kontrollverfahren bietet sich ebenfalls zur optischen Kontrolle von zusammengestellten Druckereierzeugnissen an, wenn beispielsweise gewisse Teilprodukte und/oder ein Hauptprodukt gegenüber einer Sollposition verschoben ist beziehungsweise sind. Dabei ist es für das erfindungsgemässe Kontrollverfahren nicht relevant, ob es sich bei der Verschiebung des zu kontrollierenden Druckereierzeugnisses um eine Translation, eine Rotation oder eine Überlagerung davon handelt. Das erfindungsgemässe Kontrollverfahren ist bei diversen Förder- und Bearbeitungssystemen der Druckweiterverarbeitung, beispielsweise beim Sammeln, Einstecken oder Zusammentragen ideal einsetzbar, wie sie etwa aus der CH 688091 A5, der EP 341425 B1, der EP 550828 B1 oder der EP 1539624 B1 bekannt sind. Dabei sind auch komplexe Erscheinungen bei der Druckweiterverarbeitung erfassbar, wie beispielsweise mit ihrem Falz rittlings aufeinander liegende, gegeneinander verschobene, gefaltete Druckereierzeugnisse, welche sich aufgrund der im Querschnitt gesehen kegelförmigen Geometrie voneinander weg bewegen.

Weitere Anwendungsbereiche des erfindungsgemässen Kontrollverfahren sind idealerweise dort anzutreffen, wo anschliessend Lage-, Orientierungs- und/oder Inhaltsinformationen von Druckereierzeugnissen zu ermitteln sind, insbesondere wenn deren Herstellung und das Fördern fertigungsbedingten Abweichungen/Toleranzen unterworfen ist, wie dies etwa bei der Kontrolle der Lageposition für eine nachgeschaltete Foliereinrichtung, eine Schrägbogenkontrolle, eine Kontrolle bezüglich eines Vorhandenseins von Haupt- und Teilprodukten beim Zusammenstellen (Anlegerkontrolle) oder eine Kontrolle bezüglich einer korrekten Ausrichtung von Druckereierzeugnissen, welche sich auf Sätteln von Transporteuren oder Sammelhefttrommeln, Zusammentragtrommeln, in Auslegesternen, oder in Bereichen von Umlenkungen des Förderstroms befinden, der Fall ist. Bei den Abweichungen handelt es sich beispielsweise um Verschiebungen und/oder Rotationen von Bildinhalten bezüglich Referenzwerten oder Referenzpositionen. Dies gilt insbesondere dann, wenn das Ausmass dieser Verschiebungen und/oder Rotationen zuvor nicht bekannt und/oder unregelmässig ist.

Je nach Anforderungen an das Kontrollverfahren umfasst der Schritt des Vergleichens des korrigierten Bildes mit einem Referenzwert oder einem Referenzbild vielfältige Ausführungsformen. Während bei einer ersten Ausführungsform die korrigierten Bilder von der Bildverarbeitungseinheit im Wesentlichen direkt mit einem Referenzwert oder einem Referenzbild verglichen werden, erfolgt dies bei einer zweiten Ausführungsform dadurch, dass die korrigierten Bilder vor dem Vergleich mit einem oder mehreren elektronischen Filtern weiter aufbereitet werden.

In einer dritten Ausführungsform des Kontrollverfahrens werden die Bildpunkte des korrigierten Bildes und die Bildpunkte eines Referenzbildes mit einem optimal ausgerichteten Referenzdruckereierzeugnis in den Frequenzraum übertragen, beispielsweise mit einer Fourier Transformation oder einer Fast Fourier Transformation (FFT). Die dritte Ausführungsform bietet sich besonders dann an, wenn Objekte wie etwa ein Format oder Formatwert und/oder ein Bildinhalt oder Inhaltswert auf Druckereierzeugnissen erkannt werden sollen, welche eine unterschiedliche Orientierung aufweisen.

Die Orientierung bildet im anschliessend detaillierter erläuterten Beispiel eine erste Eigenschaft des erfassten, zu kontrollierenden Druckereierzeugnisses, während die Lage eine zweite Eigenschaft des erfassten, zu kontrollierenden Druckereierzeugnisses bildet. Je nach Bedarf erfolgt die Erkennung der Lage und/oder Orientierung der Druckereierzeugnisse aus den elektronischen Bildern beziehungsweise den korrigierten Bildern in zwei oder mehr Stufen. Falls lediglich die Lage und die Orientierung der Druckereierzeugnisse für die Druckweiterverarbeitung von Interesse sind, wird in einem ersten Teilschritt beispielsweise eine allfällige Verdrehung/Rotation des Druckereierzeugnisses im Vergleich zu derjenigen eines Referenzdruckerzeugnisses ermittelt (Orientierung), während in einem zweiten Teilschritt Verschiebungen translativer Art von Druckereierzeugnissen im Vergleich zu derjenigen eines Referenzdruckerzeugnisses ermittelt werden (Lageversatz).

Eine mögliche Ermittlung eines allfälligen Rotationsversatzes und/oder Lageversatzes des erfassten Druckereierzeugnisses zur Orientierung und/oder Lage eines Referenzdruckereierzeugnisses wird in der nachfolgend detaillierter erläuterten Ausführungsform des Kontrollverfahrens anhand einer Ausführungsform des optischen Kontrollverfahrens zur Verwendung in der Druckweiterverarbeitung erklärt, wobei das Kontrollverfahren mindestens folgende Schritte umfasst: Erstens, ein Führen eines flächigen Druckereierzeugnisses entlang einer Förderstrecke an mindestens einem optischen Sensor vorbei. Zweitens, ein Erfassen eines elektronischen Bildes durch den optischen Sensor, wobei das elektronische Bild mindestens einen Bereich des Druckereierzeugnisses umfasst. Drittens, ein Extrahieren einer Orientierungsinformation des Druckereierzeugnisses aus dem elektronischen Bild. Viertens, ein Vergleichen der Orientierungsinformation des Druckereierzeugnisses aus dem elektronischen Bild mit einer Referenzorientierungsinformation und fünftens, ein Erzeugen mindestens eines Signals aufgrund eines Ergebnisses des Vergleichs.

Je nach Ausführungsform erfolgt das Extrahieren der Orientierungsinformation auf Basis von Geometriedaten des erfassten Druckereierzeugnisses oder auf Basis von mindestens einem Bildinhalt des erfassten Druckereierzeugnisses.

Die zu verarbeitenden Datenmengen sind bei der Bewältigung einer komplexen Aufgabenstellung wie einer Ermittlung eines Translationsversatzes mit einem überlagerten Rotationsversatz mit bekannten Kontrollverfahren verhältnismässig hoch, was sich auf die zur Lösung der Aufgabenstellung benötigte Zeit negativ auswirkt. Aus diesem Grund besteht ein anhaltendes Bedürfnis nach einem Kontrollverfahren, welches für einen Einsatz in Hochgeschwindigkeitssystemen geeignet ist. Beim Kontrollverfahren wird die Rechenkapazität für die Bildverarbeitung einerseits dadurch gesenkt, dass die rechnerisch komplexe Aufgabenstellung in zwei einfachere Teilaufgaben aufgetrennt wird, nämlich ein Ermitteln der Orientierung in einem ersten Teilschritt und ein Ermitteln der Lage in einem zweiten Teilschritt. Andererseits haben Versuche bestätigt, dass beim automatischen Kontrollverfahren selbst bei elektronischen Bildern mit einer verhältnismässig geringen Anzahl an Bildpunkten zuverlässige Erkennungsresultate erreichbar sind. Somit erfordert das erfindungsgemässe Kontrollverfahren lediglich eine verhältnismässig geringe Anzahl an Bildpunkten der elektronischen Bilder und somit nur relativ geringe Datenmengen an, welche in der Folge genügend rasch verarbeitbar sind. Dies erlaubt eine Datenverarbeitung in Echtzeit.

Unter dem Begriff Orientierung wird die rotatorische beziehungsweise winkelmässige Ausrichtung eines zu kontrollierenden Druckereierzeugnisses in einem kartesischen Koordinatensystem verstanden, beispielsweise eine Ausrichtung relativ zur Förderrichtung eines Fördermittels. Unter dem Begriff Lage wird die Position eines zu kontrollierenden Druckereierzeugnisses in einem kartesischen Koordinatensystem verstanden, beispielsweise eine Lage eines Druckereierzeugnisses in X- und y-Richtung relativ zu einem Fördermittel.

Eine zur Ermittlung der Orientierung erforderliche Orientierungsinformation des erfassten Druckereierzeugnisses ist beispielsweise mit dem nachfolgend erläuterten Erkennungsalgorithmus extrahierbar, welcher die folgenden Schritte umfasst: Erstens, eine Frequenztransformation des elektronischen Bildes. Zweitens, eine Betragsbildung basierend auf der Frequenztransformation; und drittens, ein Generieren der Orientierungsinformation durch eine auf der Betragsbildung basierenden Polartransformation.

Bei dieser Ausführungsform des Kontrollverfahrens stammt die zum Vergleich benötigte Referenzorientierungsinformation nicht aus einer Datenbank, sondern wird wie folgt aus dem Referenzbild extrahiert, wobei das Kontrollverfahren die folgenden Schritte umfasst: Erstens, eine Frequenztransformation eines Referenzbildes mit einem Referenzdruckereierzeugnis. Zweitens, eine Referenzbetragsbildung basierend auf der Frequenztransformation; und drittens ein Generieren der Referenzorientierungsinformation durch eine auf der Referenzbetragsbildung basierenden Polartransformation.

Ein Bildpunkt des zu kontrollierenden korrigierten Bildes f1 befindet sich dabei an den Koordinaten (x,y). Das Bild f2(x,y) ist als Bild f1 mit Translation $(x_0, y_0)$ und Rotation $\theta_0$ definiert und entspricht somit dem Referenzbild eines optimal ausgerichteten Referenzdruckereierzeugnisses. Für die Frequenztransformation bietet sich nicht zuletzt aufgrund des kontinuierlichen Verarbeitungs- oder Maschinentaktes die Fourier-Transformation als besonders geeignet an. Dabei wird der von Zeitfolgen her bekannte Zeitfaktor (t) durch eine Ortsvariable (z. B. x, y) ersetzt. Das elektronische Bild wird gewissermassen als Signalfolge über einen Ort interpretiert. In der Folge liegen beim elektronischen Bild nicht eine Zeitbasis sondern Bildpunkte vor, die so genannten Ortsfrequenzen. Die Ortsfrequenzen sind gewissermassen die Auflösung des Bildes. Das vorliegende, zweidimensionale elektronische Bild besteht demnach aus diskreten räumlichen Signalen, welche von den zwei Ortskoordinaten beziehungsweise Ortsvariabeln (x, y) abhängen. Im vorliegenden Beispiel entspricht x beispielsweise einer Förderrichtung und y einer quer zur Förderrichtung verlaufenden Richtung.

$$f_2(x, y) = f_1(x \cos\theta_0 + y \sin\theta_0 - x_0, -x \sin\theta_0 + y \cos\theta_0 - y_0)$$

Im Frequenzbereich gilt somit:

$$F_2(\xi, \eta) = e^{-j2\pi(\xi x_0 + \eta y_0)} F_1(\xi \cos\theta_0 + \eta \sin\theta_0, -\xi \sin\theta_0 + \eta \cos\theta_0)$$

Bei einer Betragsbildung dieser Spektren entsteht entsprechend dem elektronischen Bild und dem Referenzbild je ein Betrag. Unter Betrag wird ein mehrdimensionaler, absoluter Betrag verstanden. Die Eigenschaft, dass diese Beträge translationsinvariant sind, wird beim Verfahren gezielt eingesetzt.

$$|F_2(\xi, \eta)| = |F_1(\xi \cos\theta_0 + \eta \sin\theta_0, -\xi \sin\theta_0 + \eta \cos\theta_0)|$$

Beim Generieren der Referenzorientierungsinformation durch eine auf der Referenzbetragsbildung basierenden Polartransformation werden die Beträge der Spektren mit einer PolarTransformation in Polarkoordinaten umgerechnet. Dabei entstehen ein dem zu kontrollierenden, erfassten Druckereierzeugnis zugeordnetes Vergleichsspektrum und ein dem Referenzdruckereierzeugnis zugeordnetes Referenzspektrum, welche beide grafisch darstellbar sind.

$$|F_2(\rho, \theta)| = |F_1(\rho, \theta - \theta_0)|$$

Ein allfälliger Rotationsversatz des Druckereierzeugnisses bezüglich des Referenzdruckereierzeugnisses ist im Vergleichsspektrum als eine fiktive Translation erkennbar. Das Vergleichsspektrum bildet den Orientierungswert, während das Referenzspektrum den Referenzorientierungswert bildet.

Bei einer graphischen Darstellung des Vergleichsspektrums entsteht bei einem in Bezug auf Bildinhalt und Ausrichtung korrekten Druckereierzeugnis ein verhältnismässig klares Muster. Unter einem korrekten Druckereierzeugnis wird das für die Druckweiterverarbeitung erforderliche Druckereierzeugnis verstanden, welches sich relativ zum Fördermittel in einer korrekten Lage/Position befindet. Die korrekte Lage ist verarbeitungsbedingt gewissen Toleranzen unterworfen, so dass es sich bei der korrekten Lage eigentlich um einen Lagebereich handelt. Bei einem falschen und/oder fehlerhaften Druckereierzeugnis ist das Muster hingegen nicht oder kaum wahrnehmbar.

Bei Versuchen konnte wiederholt festgestellt werden, dass mit einem derartigen Kontrollverfahren auch Druckereierzeugnisse, welche im Vergleich zum Referenzdruckereizeugnis lediglich kleine, vom optischen Sensor erfassbare Unterschiede aufwiesen, klar und zuverlässig als solche identifizierbar, obwohl die Unterschiede von blossem Auge nicht sofort erkennbar waren. Ein weiterer Vorteil einer derartigen Ausführungsform des Kontrollverfahrens besteht daher darin, dass selbst verhältnismässig geringe Abweichungen zu deutlich unterschiedlichen Mustern führen.

In einem nächsten Schritt wird die Orientierungsinformation mit der Referenzorientierungsinformation verglichen, wobei der Vergleich auf einer ersten Korrelation basiert. Ein Korrelationsvergleich bietet sich für mehrdimensionale Objekte bestens an.

Wenn ein Korrelationswert der ersten Korrelation einen ersten Schwellwert unterschreitet, umfasst das oben genannte, mindestens eine Signal ein eine Sonderbehandlung des dem elektronischen Bild zugrunde liegenden Druckereierzeugnisses auslösendes erstes Signal. Der erste Schwellwert dient zur Unterscheidung einer tatsächlichen Rotation des erfassten Druckereierzeugnisses um den Rotationswinkel $\alpha$ von einem im Frequenzraum und/oder der Korrelationsmatrix vorhandenen Rauschen. Wird der erste Schwellwert vom ersten Korrelationswert unterschritten, wird das zu beurteilende Druckereierzeugnis als unpassend identifiziert - beispielsweise weil es fehlerhaft oder falsch ist. Daraufhin können beispielsweise aufgrund eines nachfolgend erläuterten Signals rechtzeitig entsprechende Massnahmen für eine Sonderbehandlung dieses Druckereierzeugnis getroffen werden. Der erste Schwellwert bildet somit ein Qualitätsmass für die Ähnlichkeit des korrigierten Bildes mit dem Referenzbild. Bei einer Ausführungsform des Kontrollverfahrens deutet eine steigende Korrelationsqualität auf eine zunehmende Ähnlichkeit der Orientierung des auf dem korrigierten Bild enthaltenen Druckereierzeugnisses mit der Orientierung des Referenzdruckereierzeugnis auf dem Referenzbild.

Versuche haben weiter gezeigt, dass auf Basis der ersten Korrelation stets zuverlässig genug zwischen einem falschen/fehlerhaften Druckereierzeugnis und einem rotierten, jedoch ansonsten korrekten Druckereierzeugnis unterschieden werden konnte.

Je nach Ergebnis der ersten Korrelation wird, basierend auf der Orientierungsinformation und der Referenzorientierungsinformation ein Rotationswinkel $\theta$ zwischen dem kontrollierten Druckereierzeugnis und dem Referenzdruckereierzeugnis samt dessen Richtungsinformation errechnet. Je nach Bedarf wird der Rotationswinkel $\theta$ und die Richtungsinformation zwischengespeichert und steht für allfällige Folgeschritte zur Verfügung.

Als Vorbereitung zur Ermittlung der zweiten Eigenschaft, hier in Form der Lage des erfassten Druckereierzeugnisses, und allfälliger translativer Verschiebungen, die sich sowohl in der x-Richtung, wie auch in der y-Richtung im kartesischen Koordinatensystem erstrecken können, wird das zwischengespeicherte elektronische Bild rechnerisch um den ermittelten Winkel $\theta$ zurückgedreht, so dass die Orientierung des darauf abgebildeten Druckereierzeugnisses derjenigen des Referenzdruckereierzeugnisses entspricht, nämlich $\theta_0$. Dieser Schritt erleichtert den nachfolgenden Vergleich des zurückgedrehten Bildes mit dem Referenzbild, da die sonst störende, überlagerte Rotation dadurch eliminiert ist. Falls Störeinflüsse wie etwa ein inhomogener Hintergrund den Bildvergleich negativ beeinflussen, wird in einem Zwischenschritt lediglich ein Ausschnitt des elektronischen Bildes weiterverwendet und je nach Bedarf mit einem entsprechenden Ausschnitt des Referenzbildes verglichen.

In einem Folgeschritt wird das zurückgedrehte elektronische Bild mit dem Referenzbild verglichen. Der Vergleich basiert auf einer zweiten Korrelation des zurückgedrehten elektronischen Bildes mit dem Referenzbild. Wenn ein Korrelationswert der zweiten Korrelation einen zweiten Schwellwert unterschreitet, umfasst das mindestens eine Signal ein eine Sonderbehandlung des dem elektronischen Bild zugrunde liegenden Druckereierzeugnisses auslösendes zweites Signal.

Der zweite Korrelationswert korreliert zum tatsächlichen Wert des allfälligen Translationsversatzes. Dabei sind die Beträge des Versatzes in der x-Richtung und der y-Richtung im kartesischen Koordinatensystem mit verhältnismässig hoher Präzision ermittelbar. Je nach Bedarf werden diese Beträge des Versatzes in der x-Richtung und der y-Richtung für nachfolgende Bearbeitungsschritte wie etwa einer Nachrichteinheit zwischengespeichert.

Etliche Versuche haben gezeigt, dass mit einem derartigen Kontrollverfahren selbst bei sehr ähnlichen zu unterscheidenden Druckereierzeugnissen vergleichsweise hohe Erkennungsraten von nahezu hundert Prozent bei gleichzeitiger Verbesserung der Robustheit des Kontrollverfahrens gegenüber dem Stand der Technik erreichbar sind. Dabei ist es unwesentlich, ob die Druckereierzeugnisse matte oder hochglänzende Oberflächen aufweisen.

In weiteren Ausführungsformen des Kontrollverfahrens bewirkt ein Eintreffen oder Ausbleiben des ersten Signals auf Basis der ersten Korrelation, dass der zweite Teilschritt gar nicht erst durchgeführt wird. Mit dieser Massnahme ist die Bildverarbeitungseinheit datenmässig weiter entlastbar.

Je nach Bedarf ist das Ergebnis des Vergleiches und/oder der Korrelationen auf den entsprechenden kontrollierten Druckereierzeugnissen zugeordneten Förderelementen des Fördermittels übertragbar, beispielsweise indem eine Schreibstation diese Informationen auf einem dem Förderelement zugeordneten oder einem im/am Förderelement angeordneten RFID-Transponder eines Förderelementes, beispielsweise eines Greifers überträgt.

Je nach Anforderungen sind im elektronischen Bild sensorbedingte Fehler kompensiert. Sensorbedingte, optische Fehler wie etwa der so genannte Kisseneffekt und/oder durch Weitwinkelobjektive verursachen unerwünschte Verzerrungen im erfassten Bild. Eine Kompensation dieser sensorbedingten Fehler erfolgt je nach Ausführungsform durch eine Frequenztransformation des erfassten Bildes beispielsweise auf Basis einer Fourier- oder einer Fast-Fourier-Transformation, gefolgt von einer elektronischen Filterung und einer anschliessende Rücktransformation. Ein Einfluss der sensorbedingten Fehler wird dadurch eliminiert oder zumindest stark gedämpft.

Bei weiteren Ausführungsformen des Kontrollverfahrens wird lediglich eine Lageerkennung der Druckereierzeugnisse durchgeführt, ohne den Bildinhalt zu berücksichtigen. Dazu ist lediglich eine Kontur der Druckereierzeugnisse von Interesse. Diese Kontur ist beispielsweise mit einem Verfahren ermittelbar, welche in der am 21. Mai 2008 eingereichten Patentanmeldung CH 766/08 mit dem Titel "Optische Positionserkennung" der gleichen Anmelderin offenbart ist.

Die der durch die Ansprüche 9-14 definierte Erfindung für die Vorrichtung zugrunde liegende Aufgabe wird mit den Merkmalen des Patentanspruchs 9 gelöst. Weitere Ausführungsformen sind Gegenstand der abhängigen Patentansprüche 10 bis 14.

Die erfindungsgemässe Vorrichtung zur optischen Kontrolle von flächigen Druckereierzeugnissen gemäss einem der erfindungsgemässen Kontrollverfahren weist mindestens einen optischen Sensor zur Erfassung von elektronischen Bildern von Druckereierzeugnissen sowie ein Fördermittel zum Transportieren der Druckereierzeugnisse vorbei am mindestens einen optischen Sensor auf. Weiter umfasst die erfindungsgemässe Vorrichtung eine Bildverarbeitungseinheit, welche eingerichtet ist zum Überführen des elektronischen Bildes in ein korrigiertes Bild auf Basis von Korrekturangaben, welche eine Aufnahmeperspektive des optischen Sensors oder der optischen Sensoren in eine Sollperspektive bewirken, zum Vergleichen des korrigierten Bildes mit einem Referenzwert oder einem Referenzbild sowie zum Erzeugen mindestens eines Signals aufgrund eines Ergebnisses des Vergleiches.

Je nach Ausführungsform der Vorrichtung umfasst die Bildverarbeitungseinheit eine Entzerreinheit. Je nach Ausführungsform der Vorrichtung sind die Entzerreinheit und die Bildverarbeitungseinheit modular gestaltet, beispielsweise indem sie auf verschiedenen Printplatten angeordnet sind. Dies erleichtert eine einsatzspezifische Konfiguration der Module. Ist beispielsweise eine Bildentzerrung sowie eine Bildverarbeitung erforderlich, so sind beide Module erforderlich, während beispielsweise bei einer reinen Konturerkennung im Zusammenhang mit einer weiteren Bildnachbearbeitungseinheit allenfalls nur die Entzerreinheit erforderlich ist.

Die Bildverarbeitungseinheit weist je nach Ausführungsform eine Referenztabelle oder eine Korrekturtabelle auf oder ist mit einer solchen wirkverbunden.

Entsprechend den Anforderungen an die Zuverlässigkeit der optischen Kontrolle, den räumlichen Gegebenheiten sowie den verarbeitungstechnischen Randbedingungen ist ein Abstand zwischen dem mindestens einen optischen Sensor und den zu erfassenden Druckereierzeugnissen variierbar. Bei typischen Anwendungsfällen beträgt der Abstand mehrere Zentimeter oder Dezimeter, und entspricht in einer Ausführungsform ungefähr einer Diagonalen eines Druckereierzeugnisses. Ist der Abstand kleiner, sind die weiter oben beschriebenen Vorteile anteilsmässig geringer als bei grösseren Abständen.

Selbstverständlich sind auch Ausführungsformen denkbar, bei denen der optische Sensor ortsfest angeordnet ist oder die Druckereierzeugnisse entlang eines Streckenabschnitts begleitet.

Je nach Ausführungsformen des optischen Sensors umfasst dieser mindestens einen CMOS-Sensorchip. Der CMOS-Sensor ist ein Halbleiterdetektor zur Lichtmessung, der in CMOS-Technologie gefertigt ist und auch als aktiver Pixelsensor (APS) bezeichnet wird.

Zur Kontrastverbesserung der elektronischen Bilder weisen weitere Ausführungsformen der erfindungsgemässen Vorrichtung eine Belichtungsquelle in Form einer Auflichtquelle oder einer Durchlichtquelle auf, welche je nach Bedarf beispielsweise durch eine oder mehrere Leuchtstoffröhren gebildet ist.

Die Bildverarbeitungseinheit einer weiteren Ausführungsform der Vorrichtung ist zum Extrahieren einer Orientierungsinformation des Druckereierzeugnisses aus dem elektronischen Bild, zum Vergleichen der Orientierungsinformation des Druckereierzeugnisses aus dem elektronischen Bild mit einer Referenzorientierungsinformation sowie zum Erzeugen mindestens eines Signals aufgrund eines Ergebnisses des Vergleichs eingerichtet.

Anhand von Figuren, welche lediglich Ausführungsbeispiele darstellen, wird die Erfindung im Folgenden erläutert. Es zeigen

Fig. 1      ein Flussdiagramm einer ersten Ausführungsform des erfindungsgemässen Kontrollverfahrens;

Fig. 2      eine vereinfachte Darstellung einer Vorrichtung zur Durchführung des erfindungsgemässen Kontrollverfahrens;

Fig. 3      eine schematische Darstellung der Erstellung eines korrigierten Bildes;

Fig. 4      ein Flussdiagramm einer weiteren Ausführungsform des erfindungsgemässen Kontrollverfahrens;

Fig. 5      eine schematische Darstellung der Erstellung eines korrigierten Bildes gemäss Figur 3 mit einer Abbildung des daraus generierten Vergleichsspektrums;

Fig. 6      ein elektronisches Bild eines zwar korrekt positionierten, jedoch falschen Druckereierzeugnisses mit einer Abbildung des daraus generierten Vergleichsspektrums analog der Figur 5;

Fig. 7      ein elektronisches Bild eines gegenüber der Lage von Figur 5 translationsversetzten, korrekten Druckereierzeugnisses mit einer Abbildung des daraus generierten Vergleichsspektrums analog der Figur 5;

Fig. 8      ein elektronisches Bild eines gegenüber dem der Lage von Figur 5 partiell räumlich gebogenen, korrekten Druckereierzeugnisses mit einer Abbildung des daraus generierten Vergleichsspektrums analog der Figur 5;

Fig. 9      ein elektronisches Bild eines gegenüber der Lage von Figur 5 rotationsversetzten, jedoch korrekten Druckereierzeugnisses mit einer Abbildung des daraus generierten Vergleichsspektrums analog der Figur 5; und

Fig. 10     eine vereinfachte Darstellung einer weiteren Vorrichtung zur Durchführung des erfindungsgemässen Kontrollverfahrens.

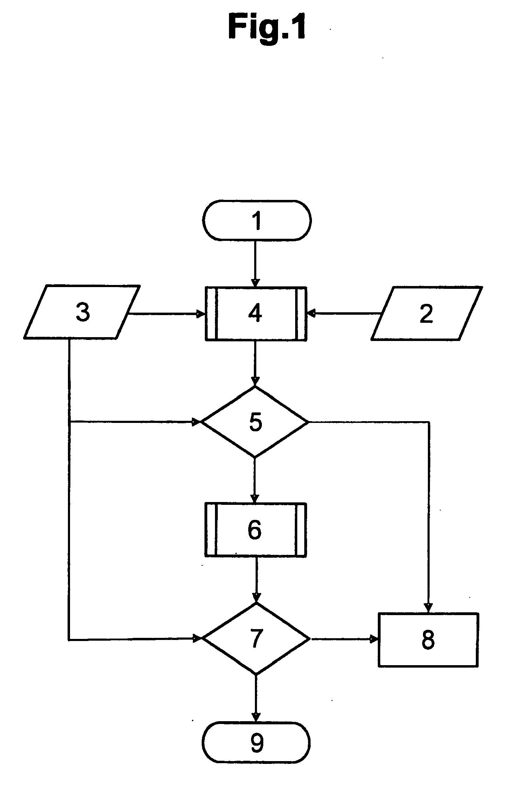

Das in **Figur 1** gezeigte Flussdiagramm einer ersten Ausführungsform des erfindungsgemässen Kontrollverfahrens illustriert den prinzipiellen Aufbau des Kontrollverfahrens. Nach dem Starten 1 des Algorithmus' des Kontrollverfahrens erstellt eine einer Bildverarbeitungseinheit zugeordnete Entzerreinheit aus einem elektronischen Bild 2 eines optischen Sensors und auf einem Referenzbild 3 basierenden Korrekturangaben ein korrigiertes Bild des zu kontrollierenden Druckereierzeugnisses in einem Entzerrschritt 4. Der Entzerrschritt 4 ist eine Art Unterprogramm des eingangs genannten Algorithmus. Die Korrekturangaben basieren dabei auf Angaben des Referenzbildes 3 mit einem Referenzdruckereierzeugnis oder einem entsprechenden Referenzwert entsprechend der Sensorposition relativ zum Druckereierzeugnis. In einem ersten Vergleichsschritt 5 wird das im korrigierten Bild enthaltene Druckereierzeugnis mit demjenigen des Referenzdruckereierzeugnisses oder einem entsprechenden ersten Referenzwert verglichen. Ist beim Vergleich keine Übereinstimmung erkennbar, wird daraus geschlossen, dass es sich beim kontrollierten Druckereierzeugnis auf dem korrigierten Bild um ein falsches oder um ein fehlerhaftes Druckereierzeugnis handelt und die Ausgabe eines ersten Signals wird veranlasst. Ist hingegen eine Übereinstimmung der ersten Eigenschaft erkennbar, so wird das kontrollierte Druckereierzeugnis auf dem elektronischen Bild als korrektes Druckereierzeugnis interpretiert. Bei der vorliegenden Ausführungsform des Verfahrens basiert die Korrektur des elektronischen Bildes auf dem Format und damit der Kontur des dem erfassten Bild zugrunde liegenden Druckereierzeugnisses.

Wenn das kontrollierte Druckereierzeugnis auf dem elektronischen Bild im ersten Vergleichsschritt 5 als korrektes Druckereierzeugnis interpretiert worden ist, sucht ein Subalgorithmus 6 nach mindestens einer Eigenschaft des Druckereierzeugnisses im korrigierten Bild. In einem nachfolgenden zweiten Vergleichsschritt 7 wird das Druckereierzeugnis im korrigierten Bild mit dem Referenzdruckereierzeugnis auf dem Referenzbild 3 verglichen. Da es sich bei der zweiten Eigenschaft im vorliegenden Fall um einen Bildinhalt handelt, sind die Referenzbilder oder -werte beim ersten und zweiten Vergleichsschritt unterschiedlich. Anders als beim vorangegangenen Entzerrschritt, bildet bei der Erkennung per Subalgorithmus ein gedruckter Bildinhalt des Referenzdruckereierzeugnisses die Vergleichsgrundlage. Werden anstelle der Referenzwerte Referenzbilder von Referenzdruckereierzeugnissen verwendet, so sind diese zwar bei beiden Vergleichsschritten identisch, es werden beim ersten und zweiten Teilschritt jedoch unterschiedliche Informationen daraus extrahiert.

Analog zum ersten Vergleichsschritt 5 wird beim zweiten Vergleichsschritt 7 wiederum zwischen einer ausreichenden Übereinstimmung und einer nicht ausreichenden Übereinstimmung unterschieden. Bei Letzterer wird ein zweites Signal ausgelöst, welches in der vorliegenden Ausführungsform im Wesentlichen dem ersten Signal entspricht und für eine Sonderbehandlung 8 der als falsch oder fehlerhaft interpretierten Druckereierzeugnisse genutzt wird. Die als korrekt identifizierten Druckereierzeugnisse werden für die Druckweiterverarbeitung freigegeben. Ein Stopp 9 definiert das Ende des Erkennungsalgorithmus. Je nach Bedarf wird jedem als korrekt identifizierten Druckereierzeugnis ein entsprechendes weiteres Signal zugeordnet, welches beispielsweise von einer Maschinensteuerung oder Maschinenregelung und/oder einer übergeordneten Steuerung/Regelung weiterverwendbar ist.

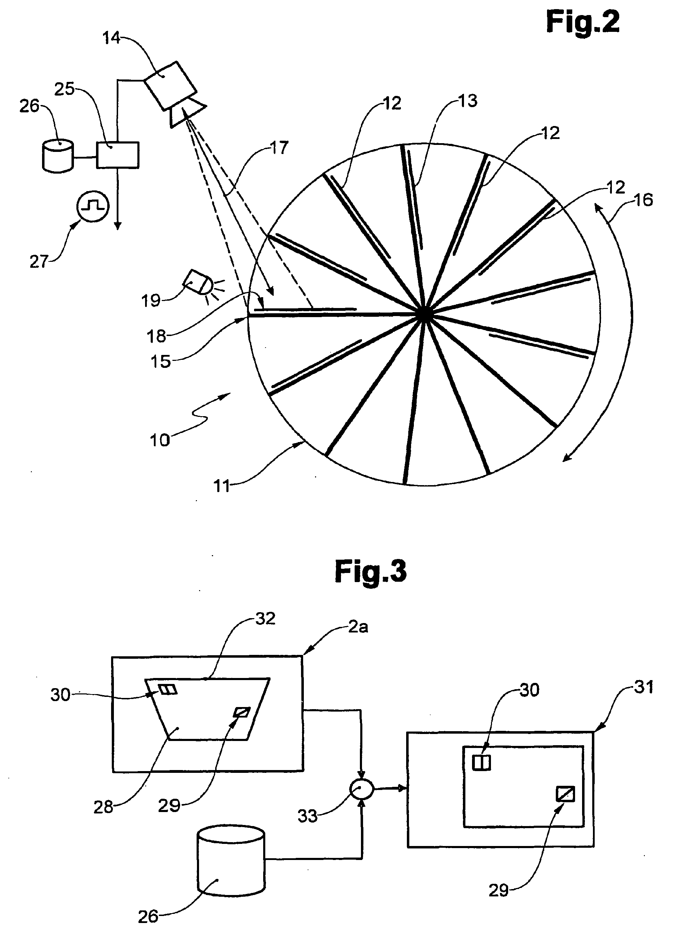

Aus der in **Figur 2** gezeigten, schematisierten, vereinfachten Darstellung einer Vorrichtung 10 zur Durchführung des erfindungsgemässen Kontrollverfahrens geht hervor, dass ein Fördermittel 11 von einer in Seitenansicht gezeigten Zusammentragtrommel gebildet ist, welche in diesem Fall gleichzeitig als Teil eines Bearbeitungsmittels für die zu kontrollierenden Druckereierzeugnisse 12, 13 dient. Die zu kontrollierenden Druckereierzeugnisse 12, 13 liegen einseitig an einer Taschenwand der Zusammentragtrommel 11 an. Ein optischer Sensor 14 ist in radialer Richtung in einem Abstand von der Zusammentragtrommel 11 angeordnet. Im vorliegenden Fall ist der Sensor 14 gegenüber einem Scheitelpunkt 15 der Zusammentragtrommel 11 entgegen der Förderrichtung 16 verschoben, um einen möglichst idealen Einblick auf die Druckereierzeugnisse zu gewährleisten. Die Förderrichtung 16 könnte dabei auch im Uhrzeigersinn umlaufen, ohne dass das erfindungsgemässe Erkennungsverfahren dadurch beeinträchtigt würde. Eine Aufnahmerichtung 17 des optischen Sensors 14 ist in der Folge derart schräg zur jeweiligen Tasche der Sammelhefttrommel 11 angeordnet, dass sich zumindest ein wesentlicher Anteil der zu kontrollierenden Druckereierzeugnisse 12, 13 in einem Aufnahmebereich 18 des optischen Sensors 14 befindet. Der optische Sensor 14 ist dabei zusätzlich in Richtung einer von der Zusammentragtrommel 11 definierten Drehachse verschiebbar, ohne dass das erfindungsgemässe Erkennungsverfahren dadurch beeinträchtigt ist.

Alternativ zur Zusammentragtrommel könnte das Fördermittel auch durch eine Sammelhefttrommel gebildet sein (nicht dargestellt). In diesem Fall sind die gefalteten Druckereierzeugnisse im Falzbereich rittlings auf Sätteln der Zusammentragtrommel angeordnet.

Im Testbetrieb umfasste der optische Sensor 14 einen CMOS-Sensorchip, welcher elektronische Bilder 2 von vorgängig zum Produktionsprozess als repräsentativ ermittelten Bildausschnitten von vergleichsweise wenigen Bildpunkten Grösse für die korrigierten Bilder beziehungsweise Referenzbilder in beispielsweise 8-Bit Graustufen im Maschinen- beziehungsweise Fördertakt des Fördermittels 11 erfasst. Durch die verhältnismässig geringe Anzahl an anfallenden Bildpunkten konnte die bei der Bildverarbeitung anfallende Datenmenge klein gehalten werden, was eine Echtzeitverarbeitung begünstigte, ohne dass die Erkennungsrate darunter litt. Zur Verbesserung des Bildkontrasts der elektronischen Bilder 2 ist beim Scheitelpunkt 15 eine den Aufnahmebereich 18 ausleuchtende Auflichtquelle 19 in Form einer Leuchtstoffröhre angeordnet.

Der optische Sensor 11 ist mit einer Bildverarbeitungseinheit 25 verbunden, welche eine Entzerreinheit umfasst, die mit einer Korrekturtabelle 26 verbunden ist. Die Korrekturangaben lagen beim Versuchsbetrieb in Form einer Vektormatrix vor, um die gewünschte Entzerrung der Perspektive für die ihnen zugeordneten Bildpunkte (Pixel) des auf dem elektronischen Bild abgebildeten Druckereierzeugnisses zu bewirken. Die Korrekturtabelle 26 ist vorteilhaft, da sie aufgrund der verhältnismässig geringen Datenmenge eine vergleichsweise rasche Bildverarbeitung begünstigt. Die erfindungsgemässe Vorrichtung 10 generierte die Korrekturangaben vorgängig zum eigentlichen Produktionsprozess anhand von Referenzbildem mit korrekten Referenzdruckereierzeugnissen für die Sensorposition, welche auch im eigentlichen Produktionsprozess beibehalten wurde.

Die Entzerreinheit dient zum Erzeugen der korrigierten Bilder 4 auf Basis der elektronischen Bilder und der Korrekturangaben. Die Bildverarbeitungseinheit 25 dient zum Korrelationsvergleich sowie als Veranlasser mindestens eines den Korrelationsergebnissen entsprechenden Signals 27.

In dem in **Figur 3** gezeigten elektronischen Bild 2a eines korrekten und bezüglich einer SollLage und Soll-Orientierung korrekt ausgerichteten Druckereierzeugnisses ist das dem zu kontrollierenden Abbild des Druckereierzeugnis 28 aufgrund der nicht rechtwinklig zur Taschenwand der Sammelhefttrommel angeordneten Aufnahmerichtung des optischen Sensors 14 in perspektivischer Ansicht enthalten. Der resultierende Verzug gegenüber einem Sollbild beziehungsweise dem Referenzbild erschwert oder verunmöglicht eine zuverlässige Erkennung des Bildinhalts für einen Bildvergleich und erfordert daher eine Entzerrung. Im elektronischen Bild 2a sind ein erster Bildinhalt 29, sowie ein zweiter Bildinhalt 30 des zu kontrollierenden Druckereierzeugnisses enthalten. Auf die Bildinhalte wird später noch detaillierter eingegangen werden.

Die Entzerrung des elektronischen Bildes 2a wirkt sich auf die Darstellung des auf dem elektronischen Bild 2a enthaltenen Abbildes des Druckereierzeugnisses 28 wie folgt aus. Beim Erstellen des korrigierten Bildes 31 anlässlich des Entzerrschrittes 4 steht im vorliegenden Beispiel nicht der tatsächliche Bildinhalt, wie beispielsweise der erste Bildinhalt 29 oder der zweite Bildinhalt 30 (hier in Form von Mustern gezeigt) im Vordergrund, sondern Geometriedaten des zu kontrollierenden Druckereierzeugnisses an sich, hier in Form einer die Korrektureigenschaft bildenden Kontur des Druckereierzeugnisses. Bei der Erstellung des korrigierten Bildes 31 auf Basis des elektronischen Bildes 2a wird das in der Realität rechteckige, zu kontrollierende Druckereierzeugnis, welches auf dem elektronischen Bild 2a einen trapezförmigen Konturverlauf aufweist, derart entzerrt, dass er auf dem korrigierten Bild 31 weitestgehend die rechteckförmigen Kontur und weitestgehend dieselben Proportionen wie das im Referenzbild enthaltene, reale Druckereierzeugnis 12 aufweist. Die Geometriedaten 32 des zu kontrollierenden, korrekten Druckereierzeugnisses 12 entsprechen hier nach der Entzerrung also im Wesentlichen denjenigen eines Soll- oder Idealbildes - sprich denjenigen eines Referenzdruckereierzeugnisses, so dass eine Aufnahmeperspektive des optischen Sensors in eine Sollperspektive überführt ist. Die dazu notwendigen Korrekturangaben gelangen von der Korrekturtabelle 26 zur Entzerreinheit 33.

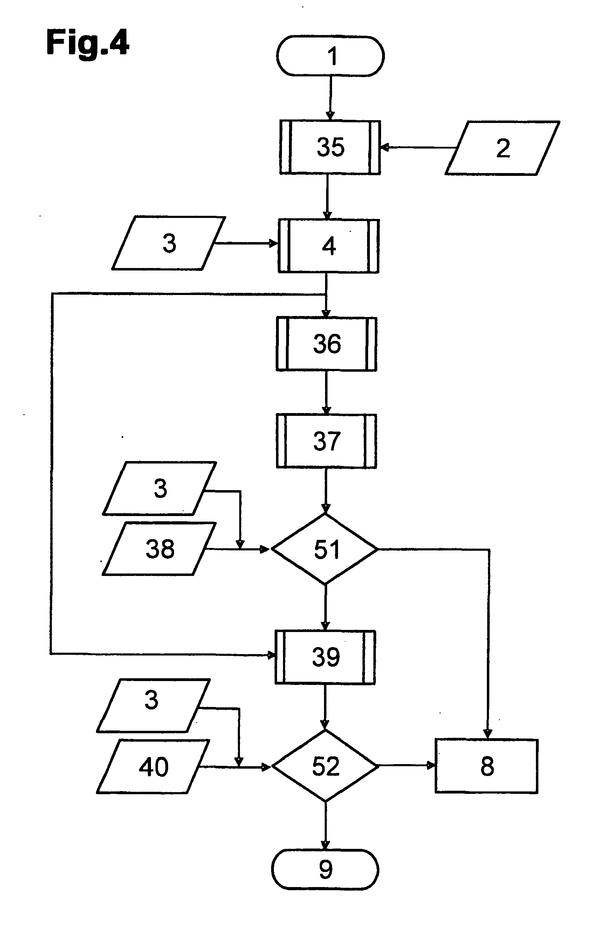

Aus dem in **Figur 4** gezeigten Flussdiagramm einer zweiten Ausführungsform des erfindungsgemässen Kontrollverfahrens geht hervor, dass ein anlässlich dem Entzerrschritt 4 des elektronischen Bildes 2 erzeugtes korrigiertes Bild als Basis für einen zweistufige Ermittlung der Lage und der Orientierung des auf dem elektronischen Bild 2 enthaltenen Abbild des Druckereierzeugnisses 28 mit einem auf dem Referenzbild 3 abgebildeten korrekten Druckereierzeugnisses dient. Bezüglich des Entzerrschrittes 4 wird auf die Beschreibung der Figuren 1 und 3 verwiesen.

Je nach Anforderung ist eine Variante des Kontrollverfahrens ohne den Entzerrschritt 4 möglich. Auf eine derartige Ausführungsform wird nachfolgend jedoch nicht weiter eingegangen.

In einem ersten Teilschritt wird abgeklärt, ob das Abbild des Druckereierzeugnisses 28 gegenüber dem auf dem Referenzbild 6 enthaltenen Referenzdruckereierzeugnis verdreht ist und wie gross ein allfälliger Rotationsversatz in Form seines Rotationswinkels ist. Die Ausrichtung und die Position des auf dem Referenzbild 3 enthaltenen Referenzdruckereierzeugnisses werden für die nachfolgend erläuterten Zwecke als ideal erachtet, weshalb das Referenzbild 3 hier einem Idealbild entspricht. Das Referenzbild 3 wurde von der erfindungsgemässen Vorrichtung wiederum vorgängig zum eigentlichen Produktionsprozess generiert.

Allfällige sensorbedingte Fehler werden für jedes elektronische Bild 2 in einem Vorbereitungsschritt 35 vor dem Entzerrschritt 4 durch eine Überführung des elektronischen Bildes 2 mittels einer Fourier-Transformation in den Frequenzraum, einer geeigneten elektronischen Filterung und einer anschliessenden Rücktransformation in den realen Raum so weit wie möglich eliminiert. Je nach Anforderung ist eine Variante des Kontrollverfahrens ohne diesen Vorbereitungsschritt 35 möglich. Im Folgenden wird auf eine derartige Ausführungsform des Verfahrens jedoch nicht näher eingegangen.

Im vorliegenden Fall stammt das Referenzbild 3 aus einem vorangegangenen Druckprozess und entspricht im Wesentlichen einem Scan eines korrekten und korrekt ausgerichteten Druckereierzeugnisses auf einem Flachbettscanner. In einem zweiten Teilschritt wird abgeklärt, ob das auf dem korrigierten Bild abgebildete Druckereierzeugnis gegenüber dem Druckereierzeugnis auf dem Referenzbild 3 verschoben ist. Dabei werden allfällige Verschiebungen translativer Art in Förderrichtung, sowie quer zur Förderrichtung ermittelt.

Beim ersten Teilschritt wird das korrigierte Bild in einem ersten Transformationsschritt 36 mit einer Fast Fourier Transformation zerlegt und das entstandene Spektrum in den Frequenzraum überführt. Anschliessend folgt eine Betragsbildung des entstandenen Spektrums. In einem nächsten Schritt, dem zweiten Transformationsschritt 37, wird das in den Frequenzraum überführte korrigierte Bild polartransformiert, damit der Rotationsversatz unabhängig von einem allfällig vorhandenen Translationsversatz ermittelbar ist. Der Rotationsversatz wird in einen fiktiven Translationsversatz umgewandelt. Beim zweiten Transformationsschritt 37 wird ein Vergleichsspektrum generiert, welches eine Orientierungsinformation für den Vergleich bildet.

Analog durchläuft auch das Referenzbild 3 den ersten Transformationsschritt 36, die Betragsbildung und den zweiten Transformationsschritt 37. Im Unterschied zum Vergleichsspektrum, wird hier jedoch ein Referenzspektrum generiert, welches die Referenzorientierungsinformation bildet.

Anhand einer ersten Korrelation 51 wird das Vergleichsspektrum mit dem Referenzspektrum verglichen und ein erster Korrelationswert gebildet. Der erste Korrelationswert spiegelt dabei eine erste Korrelationsqualität, also einen Grad der Übereinstimmung des korrigierten Bildes oder Teilen des korrigierten Bildes mit dem Referenzbild 3, wieder. Bei der vorliegenden Ausführungsform stieg die Korrelationsqualität in Versuchen bei zunehmender Ähnlichkeit der Bilder. Um ein im Frequenzraum beziehungsweise der Korrelationsmatrix vorhandenes Rauschen zuverlässig von einer tatsächlich vorliegenden Rotation des erfassten Druckereierzeugnisses um den Rotationswinkel unterscheiden zu können, wurde ein erster Schwellwert 38 definiert. Versuche zeigten, dass es sich bei denjenigen Druckereierzeugnissen, welche zu ersten Korrelationswerten führten, welche kleiner als der erste Schwellwert 14 waren, zuverlässig um falsche oder fehlerhafte Druckereierzeugnisse 13 handelte.

Ein ausbleibendes Signal aufgrund der ersten Korrelation führt dazu, der zweite Teilschritt überhaupt ausgeführt wird. Als Vorbereitung für den zweiten Teilschritt werden die korrigierten Bilder der als korrekt identifizierten Druckereierzeugnisse 12 in einem Rotationsschritt 39 um deren ermittelten Rotationswinkel, allenfalls unter Verwendung einer ebenfalls gespeicherten Richtungsinformation, elektronisch zurückgedreht. Dazu werden der zwischengespeicherte Rotationswinkel und das zwischengespeicherte korrigierte Bild abgerufen, welcher auf Basis der Orientierungsinformation und der Referenzorientierungsinformation errechnet worden sind beziehungsweise werden.

Eine Lageerkennung und eine Versatzberechung eines im elektronischen Bild 2 versetzten Abbildes 28 des Druckereierzeugnisses mit der Solllage eines Referenzdruckereierzeugnis auf dem Referenzbild ist vom Fachmann in bekannter Weise durchführbar, weshalb an dieser Stelle nicht näher darauf eingegangen wird.

Anhand einer zweiten Korrelation 52 wird das zurückgedrehte korrigierte Bild 31 mit dem Referenzbild 3 verglichen und ein zweiter Korrelationswert gebildet. Der zweite Korrelationswert spiegelt dabei eine zweite Korrelationsqualität, also einen Grad der Übereinstimmung der zurückgedrehten, korrigierten Bilder 31 und des Referenzbildes 3 wieder, welche zur Übereinstimmung der Lage des auf dem korrigierten Bild 31 abgebildeten zu kontrollierenden Druckereierzeugnisses mit der Lage des auf dem Referenzbild 3 enthaltenen Referenzdruckereierzeugnis korreliert. Bei der vorliegenden Ausführungsform zeigte sich in Versuchen, dass die zweite Korrelationsqualität bei zunehmender Ähnlichkeit der Bilder anstieg. Um ein in der Korrelationsmatrix vorhandenes Rauschen zuverlässig von einer tatsächlich vorliegenden Translation des erfassten Druckereierzeugnisses unterscheiden zu können, wurde vorgängig ein zweiter Schwellwert 40 definiert. Versuche zeigten, dass es sich bei denjenigen Druckereierzeugnissen, welche zu zweiten Korrelationswerten führten, die kleiner als der zweite Schwellwert 40 waren, zuverlässig um fehlerhafte Druckereierzeugnisse 13 handelte, während bei zweiten Korrelationswerten, welche dem zweiten Schwellwert 40 entsprachen oder grösser als der zweite Schwellwert 40 waren, zuverlässig um korrekte Druckereierzeugnisse 12 handelte - im vorliegenden Fall um identische Druckbogen.

Analog zur ersten Korrelation 51 wird bei als fehlerhaft interpretierten Druckereierzeugnissen nach der zweiten Korrelation 52 wieder ein Signal ausgegeben, das für eine Sonderbehandlung 8 der als falsch oder fehlerhaft interpretierten Druckereierzeugnisse nutzbar ist.

Wie bereits beim Vergleich anhand der ersten Korrelation steht im vorliegenden Fall auch beim Vergleich anhand der zweiten Korrelation der Bildinhalt des erfassten Druckereierzeugnisses und des Referenzdruckereierzeugnisses im Vordergrund. In weiteren Ausführungsformen wäre zum Vergleich anhand der ersten Korrelation und/oder beim Vergleich anhand der zweiten Korrelation unter Umständen jedoch auch Geometriedaten wie etwa ein Format/ eine Kontur 32 oder eine Form der zu kontrollierenden Druckereierzeugnisse realisierbar.

In einer weiteren Ausführungsform des Verfahrens wird der zweite Teilschritt vor dem ersten Teilschritt durchgeführt.

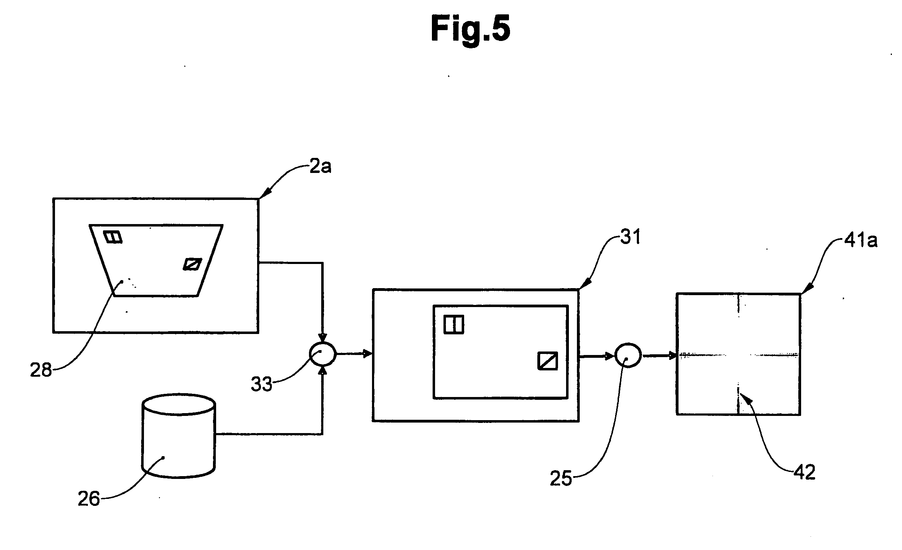

Hinsichtlich des in der Figur 5 genannten elektronischen Bildes 2a und dessen Umwandlung in ein korrigiertes Bild 31 wird auf die Beschreibung zur Figur 3 verwiesen. Die Bildverarbeitungseinheit 25 generiert aus dem korrigierten Bild 31 ein graphisch darstellbares Vergleichsspektrum 41 a. Im Vergleichsspektrum 41 a ist ein verhältnismässig klares erstes Muster 42 erkennbar, welches zur Orientierung des ihm zugrunde liegenden Druckereierzeugnisses korreliert.

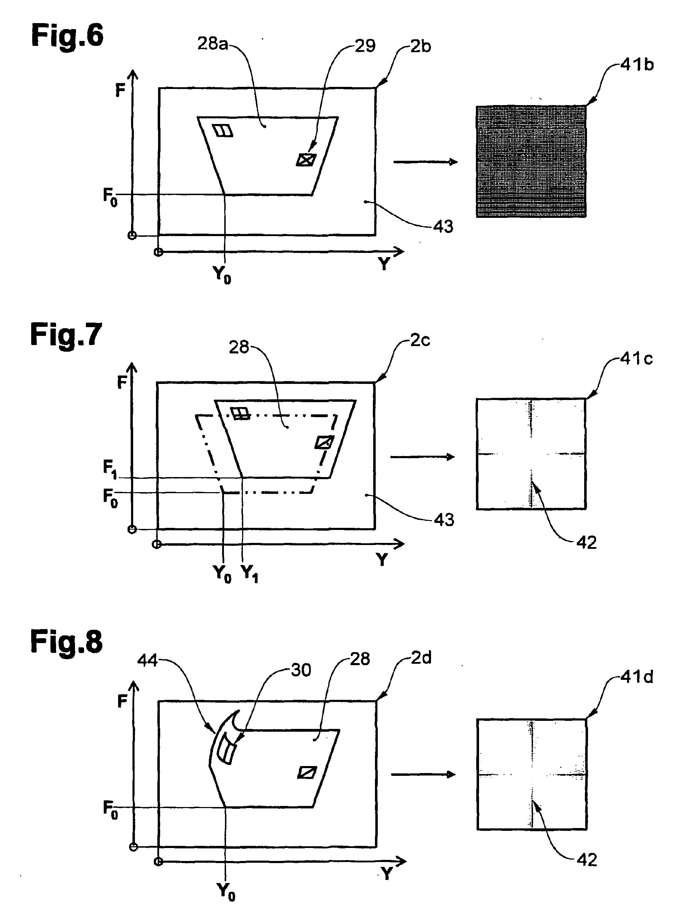

Bei den nachfolgend besprochenen Figuren 6 bis 9 erfolgt die Generierung der Vergleichsspektren analog zu demjenigen von Figur 5. Zur Vereinfachung wird daher lediglich der Zusammenhang der elektronischen Bilder mit den daraus erzeugten Vergleichsspektren aufgezeigt.

Das in Figur 6 gezeigte elektronische Bild 2b zeigt ein Druckereierzeugnis in der Position und Ausrichtung des in Figur 5 abgebildeten Druckereierzeugnisses vor demselben Hintergrund 43. Das hier gezeigte Abbild des Druckereierzeugnisses 28a unterscheidet sich jedoch vom Abbild des das Referenzdruckereierzeugnis bildenden Druckereierzeugnisses 28 im Bereich des ersten Bildinhaltes beziehungsweise Merkmals 29, welches sich lediglich leicht vom ersten Bildinhalt beziehungsweise Merkmals eines korrekten Druckereierzeugnisses beziehungsweise des Referenzdruckereierzeugnisses unterscheidet. Demzufolge handelt es sich bei diesem Druckereierzeugnis um ein falsches Druckereierzeugnis 13. Trotz des verhältnismässig kleinen bildinhaltlichen Unterschiedes bei gleichem Bildhintergrund wirkt sich dies im dargestellten Vergleichsspektrum 41 b des kontrollierten Druckereierzeugnisses unerwartet stark aus, denn im Unterschied zum Vergleichsspektrum 41 a des korrekten Druckereierzeugnis ist im Vergleichsspektrum 41 b des falschen Druckereierzeugnisses 13 das erste Muster überhaupt nicht erkennbar.

Anders sieht die in **Figur 7** gezeigte Situation beim Abbild 28 eines zwar korrekten und korrekt orientierten Druckereierzeugnisses 12 aus, welches gegenüber der in Figur 5 gezeigten

Lage an der Position $F_0$ in Förderrichtung und $Y_0$ quer zur Förderrichtung F jedoch translationsversetzt ist und sich an der Position $F_1$ in Förderrichtung und $Y_1$ quer zur Förderrichtung F befindet. Im entsprechenden Vergleichsspektrum 41c eines derart verschobenen Druckereierzeugnisses wirkt sich der Translationsversatz nicht auf das Muster aus. Das Muster entspricht dem ersten Muster 42, welches auf dem korrekten Druckereierzeugnis/Referenzdruckereierzeugnis basiert. Folglich ist ein Translationsversatz des zu kontrollierenden Druckereierzeugnisses gegenüber einem auf einem Referenzbild enthaltenen Referenzdruckereierzeugnis im Vergleichsspektrum invariant. Es versteht sich von selbst, dass der maximal zulässige Translationsversatz je nach Bedarf und Anforderungen variierbar ist. In weiteren Ausführungsformen des Verfahrens liegen die Bildpunkte nicht zwingend beieinander, sondern sind in zwei oder mehrere Teilbereiche aufgeteilt. Die Teilbereiche können beispielsweise eine Linien- oder Streifenförmige Form aufweisen.

Ähnlich zur Figur 7 führt das in **Figur 8** gezeigte elektronische Bild 2d, welches ein Abbild des Druckereierzeugnisses 28 mit einer räumlich gebogenen Ecke 44 und demnach einem verzerrten zweiten Bildinhalt des zweiten Merkmals 30 zeigt, zu einem Vergleichsspektrum 41 d, welcher wiederum dem Vergleichsspektrum 41 a des Referenzdruckereierzeugnisses entspricht.

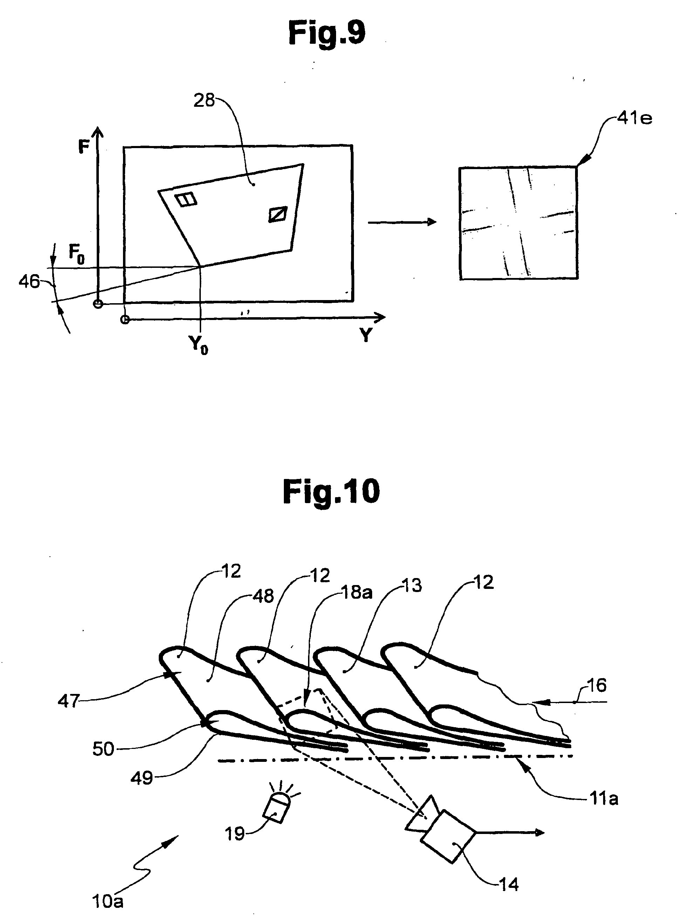

Unterschiedlich zu den anhand der Figuren 7 und 8 gezeigten Translationsversätzen und räumlichen Verformungen des zu kontrollierenden Druckereierzeugnisses wirkt sich ein anhand der **Figur 9** erklärter Rotationsversatz des zu kontrollierenden Druckereierzeugnisses zur Orientierung des Referenzdruckereierzeugnisses im Vergleichsspektrum jedoch anders aus. Auf dem elektronischen Bild 2e ist ein Abbild 28 eines zwar korrekten, jedoch gegenüber der in Figur 5 gezeigten Orientierung um einen Rotationswinkel 46 verdrehten Druckereierzeugnisses 12 sichtbar. Dies führt im entsprechend dargestellten Vergleichsspektrum 41 e zu einem zweiten Muster 45, welches sich deutlich vom ersten Muster 42 des Referenzdruckereierzeugnisses unterscheidet. Versuche zeigten, dass selbst eine verhältnismässig geringe Orientierungsabweichung mit einem Rotationswinkel 46 des zu kontrollierenden Druckereierzeugnisses zum Referenzdruckereierzeugnis von etwa einem Grad zu einem verblüffend unterschiedlichen zweiten Muster 45 im Vergleichsspektrum führte. Nicht zuletzt deshalb eignet sich ein derartiges Kontrollverhalten optimal zur optischen Kontrolle einer Orientierung von Druckereierzeugnissen, denn je deutlicher beim Vergleich ein Unterscheidungsgrad feststellbar ist, desto höher ist die Zuverlässigkeitsquote des ganzen Kontrollverfahrens. Dabei konnte der Rotationswinkel 46 im kartesischen Koordinatensystem im ersten oder im vierten Quadranten (in Gegenuhrzeigersinn gesehen) liegen. Dieser maximal zulässige Rotationswinkel 46 erlaubte eine störungsfreie, nachgeschaltete Bearbeitung. Es versteht sich von selbst, dass der maximal zulässige Rotationswinkel 46 je nach Bedarf und Anforderungen variierbar ist. In der vorliegenden Ausführungsform war zur Ermittlung eines allfälligen negativen Winkels im vierten Quadranten eine zweite Rechenoperation erforderlich. Falls ein zulässiger Rotationswinkel 46 von mehr als 90° im kartesischen Koordinatensystem ermittelt werden soll, sind entsprechende zusätzliche Rechenoperationen für die weiteren Quadranten erforderlich.

In der **Figur 10** ist ein Ausschnitt einer erfindungsgemässen, weiteren Vorrichtung 10a in vereinfachter Darstellung gezeigt. Eine Vielzahl von Druckereierzeugnissen 12, 13 liegt in einer Schuppenformation auf einem Fördermittel 11 a, welches die Druckereierzeugnisse 12, 13 entlang der Förderstrecke bzw. -Richtung 16 an einem stationären optischen Sensor 14 vorbeiführt. Die Druckereierzeugnisse 12, 13 umfassen in dieser Ausführungsform gefaltete Druckbögen, welche jeweils einen in Förderrichtung 16 gesehen vorauslaufenden Falz 47 aufweisen. Die an den Falz 47 grenzende Oberseite 48 und Unterseite 49 jedes Druckereierzeugnisses liegen dabei im Falzbereich nicht aneinander an, sondern wölben sich lokal voneinander weg, so dass sie eine in Falzrichtung verlaufende, im Querschnitt schlüssellochförmige Öffnung 50 umschliessen. Der optische Sensor 14 ist derart ausgerichtet, dass dessen Aufnahmebereich 18a die schlüssellochförmige Öffnung 50 umfasst. Falls erforderlich, ist eine Hintergrundabdeckung (nicht gezeigt) erforderlich, um einen gleichbleibenden, idealerweise homogenen Hintergrund für die zu kontrollierenden Druckereierzeugnisse 12, 13 auf den elektronischen Bildern gewährleisten zu können. Zur Kontrastverbesserung der vom Sensor 14 erfassten elektronischen Bilder ist wiederum eine Auflichtquelle 19 angeordnet.

**Bezugszeichenliste**

| 1 | Start |
|---|---|
| 2, 2a, 2b, 2b, 2c, 2d, 2e | elektronisches Bild |
| 3 | Referenzbild |
| 4 | Entzerrschritt |
| 5 | erster Vergleichsschritt |
| 6 | Subalgorithmus |
| 7 | zweiter Vergleichsschritt |
| 8 | Sonderbehandlung |
| 9 | Stopp/Ende |
| 10, 10b | Vorrichtung |
| 11, 11a | Fördermittel |
| 12 | korrektes Druckereierzeugnis |
| 13 | falsches/ fehlerhaftes Druckereierzeugnis |
| 14 | optischer Sensor |
| 15 | Scheitelpunkt |
| 16 | Förderrichtung |
| 17 | Aufnahmerichtung |
| 18, 18a | Aufnahmebereich |
| 19 | Lichtquelle |
| 25 | Bildverarbeitungseinheit |
| 26 | Korrekturtabelle |
| 27 | Signal |
| 28, 28a | Abbild eines Druckereierzeugnisses |
| 29 | erster Bildinhalt |
| 30 | zweiter Bildinhalt |
| 31 | korrigiertes Bild |
| 32 | Geometriedaten |
| 33 | Entzerreinheit |
| 35 | Vorbereitungsschritt |
| 36 | erster Transformationsschritt |
| 37 | zweiter Transformationsschritt |
| 38 | erster Schwellwert |
| 39 | Rotationsschritt |
| 40 | zweiter Schwellwert |
| 41 a, 41b, 41c, 41d, 41e | Vergleichsspektrum |
| 42 | erstes Muster |
| 43 | Hintergrund |
| 44 | gebogene Ecke |
| 45 | zweites Muster |
| 46 | Rotationswinkel |
| 47 | Falz |
| 48 | Oberseite |
| 49 | Unterseite |
| 50 | Öffnung |
| 51 | erste Korrelation |
| 52 | zweite Korrelation |

**Patentansprüche**

1. Optisches Kontrollverfahren zur Verwendung in der Druckweiterverarbeitung, beinhaltend die Schritte:

   a. Führen eines flächigen Druckereierzeugnisses (12, 13) durch ein Fördermittel (11, 11a) zum Transportieren des Druckereierzeugnisses (12, 13) entlang einer Förderstrecke an mindestens einem optischen Sensor (14) vorbei;
   b. Erfassen eines elektronischen Bildes (2, 2a, 2b, 2c, 2d, 2e) durch den optischen Sensor (14) aus einer Aufnahmeperspektive mit einer gegenüber einer vom Druckereierzeugnis (12, 13) definierten Ebene schräg angeordneten Aufnahmerichtung (7), wobei das elektronische Bild (2, 2a, 2b, 2c, 2d, 2e) mindestens einen Bereich des Druckereierzeugnisses (12,13) umfasst;

c. Überführen des elektronischen Bildes (2, 2a, 2b, 2c, 2d, 2e) in ein korrigiertes Bild (31) auf Basis von Korrekturangaben, welche die Aufnahmeperspektive des mindestens einen optischen Sensors (14) in eine Sollperspektive umwandeln, wobei die Sollperspektive eine im Wesentlichen rechtwinklig zu der vom Druckereierzeugnis (12, 13) definierten Ebene angeordnete Aufnahmerichtung aufweist;

d. Vergleichen des korrigierten Bildes (31) mit einem Referenzwert oder einem Referenzbild (3); und

e. Erzeugen mindestens eines Signals (27) aufgrund eines Ergebnisses des Vergleichs.

**2.** Kontrollverfahren gemäss Anspruch 1, **dadurch gekennzeichnet, dass** die Korrekturangaben Befehle enthalten, um Bildpunkte des elektronischen Bildes (2, 2a, 2b, 2c, 2d, 2e) in entsprechende Bildpunkte des korrigierten Bildes (31) zu überführen.

**3.** Kontrollverfahren gemäss Anspruch 1 oder 2, **dadurch gekennzeichnet, dass** zumindest das Überführen des elektronischen Bildes (2, 2a, 2b, 2c, 2d, 2e) in das korrigierte Bild (31) in Echtzeit erfolgt, vorzugsweise innerhalb einer Arbeitstaktzeit.

**4.** Kontrollverfahren gemäss einem der Ansprüche 1 bis 3, **dadurch gekennzeichnet, dass** die Korrekturangaben auf einer Bildverarbeitungseinheit (25) gespeichert sind oder der Bildverarbeitungseinheit (25) zugeführt werden.

**5.** Kontrollverfahren gemäss einem der Ansprüche 1 bis 4, **dadurch gekennzeichnet, dass** die Korrekturangaben aus einer Referenztabelle oder einer Korrekturtabelle (26) stammen.

**6.** Kontrollverfahren gemäss einem der Ansprüche 1 bis 5, **dadurch gekennzeichnet, dass** die Korrekturangaben vorgängig zu einem Produktionsprozess generiert werden und auf Geometrieangaben (32) des erfassten Druckereierzeugnisses oder auf mindestens einem Bildinhalt (29, 30) des erfassten Druckereierzeugnisses basieren.

**7.** Kontrollverfahren gemäss einem der Ansprüche 1 bis 6, **dadurch gekennzeichnet, dass** im elektronischen Bild (2, 2a, 2b, 2c, 2d, 2e) sensorbedingte Fehler kompensiert sind.

**8.** Kontrollverfahren gemäss einem der Ansprüche 1 bis 7, **dadurch gekennzeichnet, dass** das elektronische Bild (2, 2a, 2b, 2c, 2d, 2e) vorgängig mit einem Sobel-Filter gefiltert worden ist.

**9.** Vorrichtung zur Durchführung des optischen Kontrollverfahrens gemäss einem der Ansprüche 1 bis 8, wobei die Vorrichtung (10, 10a) mindestens einen optischen Sensor (14) zur Erfassung von elektronischen Bildern (2, 2a, 2b, 2c, 2d, 2e) von Druckereierzeugnissen (12, 13) aus einer Aufnahmeperspektive mit einer gegenüber einer durch die Druckereierzeugnisse (12, 13) definierten Ebene schräg angeordneten Aufnahmerichtung (7), ein Fördermittel (11, 11 a) zum Transportieren der Druckereierzeugnisse (12, 13) vorbei am mindestens einen optischen Sensor (14) sowie eine Bildverarbeitungseinheit (25) aufweist, welche eingerichtet ist zum Überführen des elektronischen Bildes (2, 2a, 2b, 2c, 2d, 2e) in ein korrigiertes Bild (31) auf Basis von Korrekturangaben, welche die Aufnahmeperspektive des optischen Sensors (14) oder der optischen Sensoren in eine Sollperspektive bewirken, wobei die Sollperspektive eine im Wesentlichen rechtwinklig zu der durch die Druckereierzeugnisse (12, 13) definierten Ebene angeordnete Aufnahmerichtung aufweist, zum Vergleichen des korrigierten Bildes (31) mit einem Referenzwert oder einem Referenzbild (3) sowie zum Erzeugen mindestens eines Signals (27) aufgrund eines Ergebnisses des Vergleichs.

**10.** Vorrichtung gemäss Anspruch 9, **dadurch gekennzeichnet, dass** die Bildverarbeitungseinheit (25) eine Entzerreinheit (33) umfasst.

**11.** Vorrichtung gemäss Anspruch 9 oder 10, **dadurch gekennzeichnet, dass** die Bildverarbeitungseinheit (25) eine Referenztabelle oder eine Korrekturtabelle (26) aufweist oder mit einer Referenztabelle oder einer Korrekturtabelle (26) wirkverbunden ist.

**12.** Vorrichtung gemäss einem der Ansprüche 9 bis 11, **dadurch gekennzeichnet, dass** der optische Sensor (14) beim Erfassen der elektronischen Bilder (2, 2a, 2b, 2c, 2d, 2e) um einen Abstand von den zu kontrollierenden Druckereierzeugnissen (12, 13) entfernt ist, wobei der Abstand mindestens etwa einer Diagonalen eines Druckereierzeugnisses entspricht.

**13.** Vorrichtung gemäss einem der Ansprüche 9 bis 12, **dadurch gekennzeichnet, dass** eine Aufnahmerichtung (17) des Sensors (14) in einem freien Winkel zu den zu kontrollierenden Druckereierzeugnissen (12, 13) angeordnet ist, wobei der freie Winkel eine Neigung der Aufnahmerichtung (17) zu einer vom Druckereierzeugnis (12, 13) definierten Ebene, sowohl in Förderrichtung wie auch quer zur Förderrichtung, ist.

**14.** Vorrichtung gemäss einem der Ansprüche 9 bis 13, **dadurch gekennzeichnet, dass** die Vorrichtung (10, 10a) zur Kontrastverbesserung der elektronischen Bilder (2, 2a, 2b, 2c, 2d, 2e) eine Lichtquelle (19) in Form einer Auflichtquelle oder einer Durchlichtquelle aufweist.

**Claims**

1. An optical control method for use in print finishing, comprising the following steps:

   a. guiding a planar printed product (12, 13) by means of a conveying means (11, 11a) for transporting the printed product (12, 13) along a conveying path past at least one optical sensor (14);
   b. detecting an electronic image (2, 2a, 2b, 2c, 2d, 2e) by means of the optical sensor (14) from a recording perspective with a recording direction (7) arranged obliquely relative to a plane defined by the printed product (12, 13) wherein the electronic image (2, 2a, 2b, 2c, 2d, 2e) comprises at least one region of the printed product (12, 13);
   c. converting the electronic image (2, 2a, 2b, 2c, 2d, 2e) into a corrected image (31) on the basis of correction indications which convert the recording perspective of the at least one optical sensor (14) into a desired perspective, wherein the desired perspective has a recording direction arranged substantially at right angles with respect to the plane defined by the printed product (12, 13);
   d. comparing the corrected image (31) with a reference value or a reference image (3); and
   e. generating at least one signal (27) on the basis of a result of the comparison.

2. The control method as claimed in claim 1, **characterized in that** the correction indications contain commands for converting pixels of the electronic image (2, 2a, 2b, 2c, 2d, 2e) into corresponding pixels of the corrected image (31).

3. The control method as claimed in claim 1 or 2, **characterized in that** at least converting the electronic image (2, 2a, 2b, 2c, 2d, 2e) into the corrected image (31) takes place in real time, preferably within an operating cycle time.

4. The control method as claimed in any of claims 1 to 3, **characterized in that** the correction indications are stored on an image processing unit (25) or are fed to the image processing unit (25).

5. The control method as claimed in any of claims 1 to 4, **characterized in that** the correction indications originate from a reference table or a correction table (26).

6. The control method as claimed in any of claims 1 to 5, **characterized in that** the correction indications are generated prior to a production process and are based on geometry indications (32) of the detected printed product or on at least one image content (29, 30) of the detected printed product.

7. The control method as claimed in any of claims 1 to 6, **characterized in that** sensor-dictated errors are compensated for in the electronic image (2, 2a, 2b, 2c, 2d, 2e).

8. The control method as claimed in any of claims 1 to 7, **characterized in that** the electronic image (2, 2a, 2b, 2c, 2d, 2e) has been filtered previously by means of a Sobel filter.

9. An apparatus for carrying out the optical control method as claimed in any of claims 1 to 8, wherein the apparatus (10, 10a) has at least one optical sensor (14) for detecting electronic images (2, 2a, 2b, 2c, 2d, 2e) of printed products (12, 13) from a recording perspective with a recording direction (7) arranged obliquely relative to a plane defined by the printed products (12, 13), a conveying means (11, 11a) for transporting the printed products (12, 13) past the at least one optical sensor (14), and an image processing unit (25), which is designed for converting the electronic image (2, 2a, 2b, 2c, 2d, 2e) into a corrected image (31) on the basis of the correction indications which bring about the recording perspective of the optical sensor (14) or of the optical sensors into a desired perspective, when the desired perspective has a recording direction arranged substantially at right angles with respect to the plane defined by the printed products (12, 13) for comparing the corrected image (31) with a reference value or a reference image (3), and for generating at least one signal (27) on the basis of a result of the comparison.

**10.** The apparatus as claimed in claim 9, **characterized in that** the image processing unit (25) comprises a rectifying unit (33).

**11.** The apparatus as claimed in claim 9 or 10, **characterized in that** the image processing unit (25) has a reference table or a correction table (26) or is operatively connected to a reference table or a correction table (26).

**12.** The apparatus as claimed in any of claims 9 to 11, **characterized in that** the optical sensor (14), when detecting the electronic images (2, 2a, 2b, 2c, 2d, 2e) is at a distance from the printed products (12, 13) to be controlled, wherein the distance corresponds at least approximately to a diagonal of a printed product.

**13.** The apparatus as claimed in any of claims 9 to 12, **characterized in that** a recording direction (17) of the sensor (14) is arranged at a free angle with respect to the printed products (12, 13) to be controlled, wherein the free angle is an inclination of the recording direction (17) with respect to a plane defined by the printed product (12, 13) both in the conveying direction and transversely with respect to the conveying direction.

**14.** The apparatus as claimed in any of claims 9 to 13, **characterized in that** the apparatus (10, 10a) has a light source (19) in the form of a reflected light source or a transmitted light source in order to enhance the contrast of the electronic images (2, 2a, 2b, 2c, 2d, 2e).

**Revendications**

**1.** Procédé de contrôle optique destiné à être utilisé dans la suite d'un traitement d'imprimerie, le procédé comprenant les étapes qui consistent à :

a. guider un produit d'imprimerie plat (12, 13) par un moyen de transport (11, 11a) destiné à transporter le produit d'imprimerie (12, 13) le long d'un parcours de transport qui passe devant au moins un détecteur optique (14),

b. faire saisir une image électronique (2, 2a, 2b, 2c, 2d, 2e) par le détecteur optique (14) dans une perspective dont la direction d'enregistrement (7) est disposée obliquement par rapport au plan défini par le produit d'imprimerie (12, 13), l'image électronique (2, 2a, 2b, 2c, 2d, 2e) contenant au moins une partie du produit d'imprimerie (12, 13),

c. convertir l'image électronique (2, 2a, 2b, 2c, 2d, 2e) en une image corrigée (31) sur la base de données de correction qui convertissent la perspective d'enregistrement du ou des détecteurs optiques (14) en une perspective de consigne, la direction d'enregistrement de la perspective de consigne étant essentiellement perpendiculaire au plan défini par le produit d'imprimerie (12, 13),

d. comparer l'image corrigée (31) à une valeur de référence ou à une image de référence (3) et

e. former au moins un signal (27) sur la base du résultat de la comparaison.

**2.** Procédé de contrôle selon la revendication 1, **caractérisé en ce que** les données de correction contiennent des commandes qui convertissent des points d'image de l'image électronique (2, 2a, 2b, 2c, 2d, 2e) en points d'image correspondants de l'image corrigée (31).

**3.** Procédé de contrôle selon les revendications 1 ou 2, **caractérisé en ce qu'**au moins la conversion de l'image électronique (2, 2a, 2b, 2c, 2d, 2e) en l'image corrigée (31) s'effectue en temps réel et de préférence à l'intérieur de la durée d'une cadence de travail.

**4.** Procédé de contrôle selon l'une des revendications 1 à 3, **caractérisé en ce que** les données de correction sont conservées en mémoire dans une unité (25) de traitement d'image ou sont apportées à l'unité (25) de traitement d'image.

**5.** Procédé de contrôle selon l'une des revendications 1 à 4, **caractérisé en ce que** les données de correction proviennent d'un tableau de référence ou d'un tableau de correction (26).

**6.** Procédé de contrôle selon l'une des revendications 1 à 5, **caractérisé en ce que** les données de correction sont produites avant l'opération de production et sont basées sur des données géométriques (32) du produit d'imprimerie saisi ou sur au moins un contenu (29, 30) de l'image du produit d'imprimerie saisi.

7. Procédé de contrôle selon l'une des revendications 1 à 6, **caractérisé en ce que** les erreurs provoquées par le détecteur dans l'image électronique (2, 2a, 2b, 2c, 2d, 2e) sont compensées.

8. Procédé de contrôle selon l'une des revendications 1 à 7, **caractérisé en ce que** l'image électronique (2, 2a, 2b, 2c, 2d, 2e) est filtrée préalablement à l'aide d'un filtre de Sobel.

9. Dispositif en vue de l'exécution du procédé de contrôle optique selon l'une des revendications 1 à 8, le dispositif (10, 10a) présentant
au moins un détecteur optique (14) qui saisit des images électroniques (2, 2a, 2b, 2c, 2d, 2e) de produits d'imprimerie (12, 13) dans une perspective d'enregistrement dont la direction d'enregistrement (7) est disposée obliquement par rapport au plan défini par les produits d'imprimerie (12, 13),
un moyen de transport (11, 11a) qui transporte les produits d'imprimerie (12, 13) devant au moins un détecteur optique (14) ainsi qu'une unité (25) de traitement d'image conçue pour convertir l'image électronique (2, 2a, 2b, 2c, 2d, 2e) en une image corrigée (31) sur la base de données de correction qui ont pour effet de convertir la perspective d'enregistrement du détecteur optique (14) ou des détecteurs optiques en une perspective de consigne,
la direction d'enregistrement de la perspective de consigne étant disposée essentiellement à la perpendiculaire du plan défini par les produits d'imprimerie (12, 13), pour comparer l'image corrigée (31) à une valeur de référence ou à une image de référence (3) ainsi que pour former au moins un signal (27) sur la base du résultat de la comparaison.

10. Dispositif selon la revendication 9, **caractérisé en ce que** l'unité (25) de traitement d'image comprend une unité (33) de défloutage.

11. Dispositif selon les revendications 9 ou 10, **caractérisé en ce que** l'unité (25) de traitement d'image présente un tableau de référence ou un tableau de correction (26) ou est reliée fonctionnellement à un tableau de référence ou à un tableau de correction (26).

12. Dispositif selon l'une des revendications 9 à 11, **caractérisé en ce que** le détecteur optique (14) est disposé lors de la saisie des images électroniques (2, 2a, 2b, 2c, 2d, 2e) à une distance des produits d'imprimerie (12, 13) à contrôler, la distance correspondant au moins sensiblement à une diagonale d'un produit d'imprimerie.

13. Dispositif selon l'une des revendications 9 à 12, **caractérisé en ce qu'**un dispositif d'enregistrement (17) du détecteur (14) est disposé à un angle libre par rapport aux produits d'imprimerie (12, 13) à contrôler, l'angle libre étant une inclinaison de la direction d'enregistrement (17) par rapport au plan défini par le produit d'imprimerie (12, 13), aussi bien dans la direction du transport que transversalement par rapport à la direction du transport.

14. Dispositif selon l'une des revendications 9 à 13, **caractérisé en ce que** pour améliorer le contraste des images électroniques (2, 2a, 2b, 2c, 2d, 2e), le dispositif (10, 10a) présente une source de lumière (19) qui a la forme d'un éclairage incident ou d'un éclairage en transparence.

# Fig.1

**Fig.2**

**Fig.3**

20

**Fig.4**

Fig.5

**Fig.6**

**Fig.7**

**Fig.8**

# Fig.9

# Fig.10

**EP 2 310 309 B1**

**IN DER BESCHREIBUNG AUFGEFÜHRTE DOKUMENTE**

**In der Beschreibung aufgeführte Patentdokumente**

- EP 0685420 A
- US 20060147092 A1
- EP 534115 A1
- JP 2004098489 A
- CH 688091 A5
- EP 341425 B1
- EP 550828 B1
- EP 1539624 B1